Europäisches Patentamt

European Patent Office

Office européen des brevets

(11) Numéro de publication: **0 525 817 B1**

(12) **FASCICULE DE BREVET EUROPEEN**

(45) Date de publication du fascicule du brevet: **25.10.95** (51) Int. Cl.⁶: **B62D 1/12**

(21) Numéro de dépôt: **92113228.8**

(22) Date de dépôt: **03.08.92**

---

(54) **Dispositif de commande de direction d'un véhicule.**

---

(30) Priorité: **02.08.91 FR 9109986**

(43) Date de publication de la demande:
**03.02.93 Bulletin 93/05**

(45) Mention de la délivrance du brevet:
**25.10.95 Bulletin 95/43**

(84) Etats contractants désignés:
**AT BE CH DE DK ES FR GB GR IE IT LI LU NL PT SE**

(56) Documents cités:
WO-A-88/09279    WO-A-88/09279
WO-A-91/06903    DE-U- 7 217 675
FR-E- 93 568     US-A- 4 920 820

(73) Titulaire: **SMH Management Services AG**
**Seevorstadt 6**
**CH-2501 Biel (CH)**

(72) Inventeur: **Edye, Thomas**
**Rue des Prés 55A**
**CH-2017 Boudry (CH)**
Inventeur: **Müller, Jacques**
**Les Oeuchettes 18**
**CH-2732 Reconvilier (CH)**
Inventeur: **Hoehener, Rémy**
**Rue des Berthoudes 72**
**CH-2000 Neuchâtel (CH)**
Inventeur: **Frehner, Marc**
**Inzlingerstrasse 276**
**CH-4125 Riehen (CH)**
Inventeur: **Béroud, Claude**
**Les Coillards 14**
**CH-2738 Court (CH)**

(74) Mandataire: **de Montmollin, Henri et al**
**ICB**
**Ingénieurs Conseils en Brevets SA**
**Rue des Sors 7**
**CH-2074 Marin (CH)**

---

Rank Xerox (UK) Business Services
(3.10/3.09/3.3.3)

EP 0 525 817 B1

## Description

La présente invention a pour objet un dispositif de commande de direction d'un véhicule comportant au moins une roue directrice mobile angulairement par rapport à un axe de pivotement pour déterminer la direction de déplacement dudit véhicule, ledit dispositif comportant des moyens de commande actionnables manuellement par le conducteur dudit véhicule pour diriger ledit véhicule et des moyens d'asservissement couplés à ladite roue et auxdits moyens de commande pour asservir la position angulaire de ladite roue autour dudit axe de pivotement à la position desdits moyens de commande.

Dans tous les véhicules tels que les voitures automobiles ou les camions fabriqués et vendus actuellement, les moyens de commande actionnables manuellement par le conducteur pour diriger son véhicule sont constitués par un volant monté sur un arbre, généralement appelé colonne de direction, qui est couplé mécaniquement aux roues directrices.

En cas d'accident, par exemple en cas de collision avec un obstacle fixe ou un autre véhicule, le conducteur du véhicule peut être gravement blessé, voire même tué, en étant projeté violemment contre le volant ou, si ce dernier se déforme ou se casse, contre l'extrémité de la colonne de direction qui peut en outre être elle-même projetée dans l'habitacle de la voiture en direction du conducteur.

De même, un passager ayant pris place à côté du conducteur peut être grièvement blessé, ou même tué, en étant projeté violemment contre le tableau de bord et/ou le pare-brise du véhicule.

Une des mesures les plus efficaces qui ont été proposées et réalisées pour supprimer ou au moins atténuer ce danger consiste à équiper le véhicule de coussins de protection qui sont normalement vides et pliés dans des logements adéquats et qui sont gonflés très rapidement en cas de collision, ces coussins étant disposés et dimensionnés de manière que, lorsqu'ils sont gonflés, ils amortissent le choc du conducteur et de son passager contre le volant et, respectivement, contre le tableau de bord ou le pare-brise.

Le logement destiné à contenir le coussin de protection du conducteur en temps normal, c'est-à-dire lorsque ce coussin est vide et plié, ne peut évidemment être ménagé que dans le moyeu du volant.

Il en découle d'une part que ce moyeu doit avoir des dimensions relativement importantes, ce qui peut nuire à la visibilité des instruments du tableau de bord, et d'autre part que ce coussin ne peut pas avoir de grandes dimensions lorsqu'il est gonflé, ce qui limite son efficacité en cas d'accident.

Il en découle également que le coussin de protection du conducteur et le coussin de protection du passager doivent être distincts l'un de l'autre, ce qui augmente leur coût.

Le certificat d'addition FR-E-93 568 décrit un dispositif de commande d'un véhicule comportant des manettes actionnables par le conducteur de ce véhicule. Ces manettes, qui sont montées aux extrémités des accoudoirs du siège du conducteur du véhicule, peuvent être déplacées vers l'avant ou vers l'arrière et sont couplées à la vis de direction du véhicule par l'intermédiaire de crémaillères, de roues dentées et d'une chaîne. Ce dispositif est assez complexe et demande un effort important de la part du conducteur pour diriger le véhicule.

La demande de brevet Wo 88/09279 décrit un autre dispositif de commande d'un véhicule selon la première partie de la revendication 1, dispositif qui comporte également des manettes actionnables par le conducteur de ce véhicule. Ces manettes, qui sont montées devant le tableau de bord du véhicule, sont mobiles en rotation autour d'axes parallèles à l'axe longitudinal du véhicule et sont couplées à des capteurs fournissant un signal représentatif de leur position angulaire à un circuit de commande d'un moteur entraînant la crémaillère de direction du véhicule. Ce dispositif ne comporte aucun moyen permettant au conducteur du véhicule de sentir, par l'intermédiaire des manettes, les réactions de ce véhicule aux changements de direction qu'il lui impose et aux irrégularités du sol sur lequel il roule. Il en découle un certain sentiment d'insécurité pour le conducteur du véhicule.

Un but de l'invention est de proposer un dispositif de commande de direction d'un véhicule grâce auquel ces inconvénients sont supprimés, c'est-à-dire grâce auquel l'efficacité de la protection en cas d'accident offerte au conducteur du véhicule peut être augmentée, le coût du dispositif de protection de ce conducteur et de son passager peut être diminué, et qui donne à ce conducteur un grand sentiment de sécurité de conduite.

Ce but est atteint par le dispositif dont les caractéristiques sont énumérées dans la revendication 1 annexée.

D'autres buts et avantages de la présente invention seront rendus évidents par la description qui va être faite ci-après en se référant au dessin dans lequel :

- la figure 1 est une vue de dessus partielle et schématique d'un véhicule comportant un dispositif de commande de direction selon l'invention;
- la figure 2 est une vue latérale partielle et schématique du véhicule de la figure 1;
- la figure 3 représente schématiquement le dispositif de commande de direction du véhicule de la figure 1;
- la figure 4 est une vue de dessus partielle et schématique d'un véhicule comportant un autre dispositif de commande de direction selon l'invention;
- la figure 5 représente schématiquement un dispositif de commande de direction du véhicule de la figure 4; et
- la figure 6 représente schématiquement un autre dispositif de commande de direction du véhicule de la figure 4.

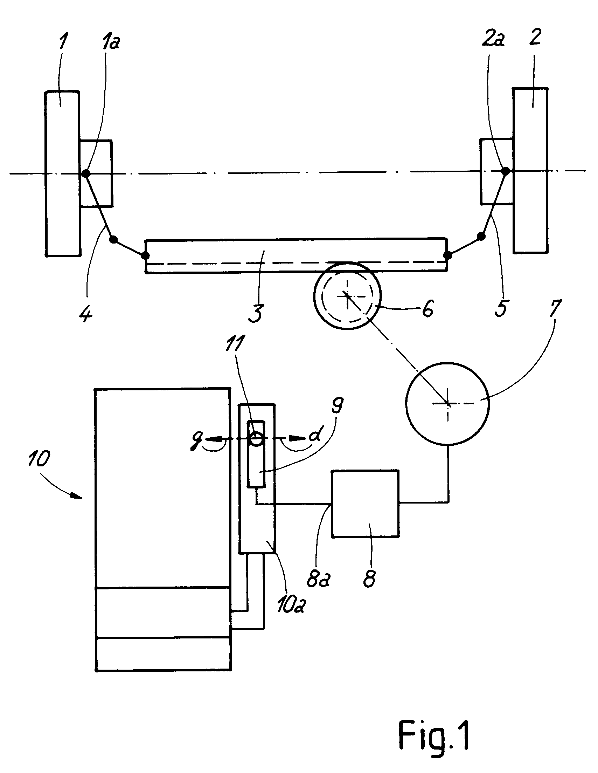

Le véhicule représenté schématiquement et partiellement à la figure 1 dans une vue de dessus comporte deux roues directrices 1 et 2 fixées à un essieu, non représenté, de manière à pouvoir tourner, chacune, autour d'un pivot 1a, respectivement 2a, d'axe sensiblement vertical, c'est-à-dire sensiblement perpendiculaire au plan de cette figure 1.

Les roues 1 et 2 sont toutes deux couplées mécaniquement à une crémaillère 3 par des barres articulées désignées par les références 4 et 5, qui ne sont représentées que de manière symbolique et ne seront pas décrites en détail car il s'agit d'éléments bien connus des spécialistes.

La crémaillère 3 est guidée par des glissières non représentées qui ne lui permettent qu'un déplacement dans le sens de sa longueur, et les barres 4 et 5 sont agencées de manière que les roues 1 et 2 pivotent autour des axes 1a et 2a, dans le même sens, en réponse à ce déplacement de cette crémaillère 3. Le pivotement des roues 1 et 2 est limité, de chaque côté, par des butées non représentées.

Les dents de la crémaillère 3 sont en prise avec une roue dentée 6 qui est elle-même couplée mécaniquement au rotor d'un moteur électrique 7. Ce rotor n'a pas été représenté séparément. Selon les cas, cette roue dentée 6 peut être directement solidaire de l'arbre du rotor du moteur 7 ou être reliée à cet arbre par l'intermédiaire d'un train d'engrenages non représenté.

Le moteur 7 est commandé par un circuit électronique 8 dont un exemple sera décrit plus loin. On mentionnera simplement ici que ce circuit 8 comporte une entrée 8a, et qu'il est agencé de manière à asservir la position angulaire du rotor du moteur 7, et donc la position angulaire des roues 1 et 2 par rapport à leurs pivots 1a et 2a, à un signal variable appliqué à cette entrée 8a.

Ce signal variable est fourni par un dispositif 9 qui est, dans le présent exemple, incorporé à l'accoudoir 10a du siège 10 du conducteur du véhicule.

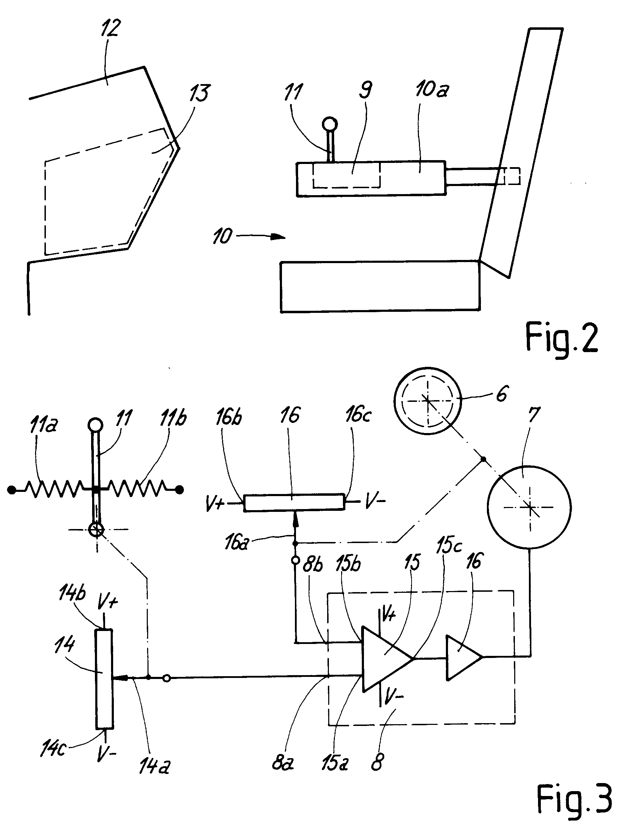

Le dispositif 9 comporte une manette 11 qui s'étend vers le haut depuis la surface supérieure de l'accoudoir 10a (voir la figure 2) et qui est disposée de manière que le conducteur du véhicule puisse la tenir facilement pour l'incliner vers la droite ou vers la gauche, c'est-à-dire dans un plan au moins sensiblement perpendiculaire à l'axe longitudinal du véhicule, entre deux butées de limitation non représentées. Les déplacements possibles de l'extrémité supérieure de la manette 11 sont symbolisés à la figure 1 par les flèches en traits interrompus g (pour gauche) et d (pour droite).

Le dispositif 9 comporte également un capteur de position couplé mécaniquement à la manette 11, qui n'est pas visible dans les figures 1 et 2 mais dont un exemple sera décrit plus loin, et qui fournit un signal électrique représentatif de la position de cette manette 11.

C'est ce signal fourni par ce capteur qui est appliqué à l'entrée 8a du circuit électronique 8 et qui est utilisé par ce dernier pour commander la position angulaire du rotor du moteur 7.

Il est évident que le véhicule représenté à la figure 1 comporte également des roues motrices, qui peuvent d'ailleurs être constituées par les roues directrices elles-mêmes, au moins un moteur couplé à ces roues motrices, et des moyens actionnables par le conducteur, qui peuvent être constitués par des pédales, pour faire avancer, reculer ou pour freiner son véhicule.

Tous ces éléments, ainsi que les nombreux autres éléments qui équipent généralement un véhicule, n'ont pas été représentés dans la figure 1 car ils n'ont pas de lien direct avec la présente invention. Il en sera de même dans les autres figures qui seront décrites plus loin.

Le dispositif 9 comporte également des moyens de rappel de la manette 11 dans sa position médiane, ou position de repos, qui ne sont pas non plus visibles dans les figures 1 et 2.

On voit facilement que les moyens de commande actionnables manuellement par le conducteur du véhicule représenté à la figure 1 pour diriger celui-ci sont constitués, dans cet exemple, par la manette 11.

En effet, quelle que soit la position dans laquelle le conducteur du véhicule met la manette 11, le dispositif 9 produit un signal électrique représentatif de cette position.

En réponse à ce signal, le circuit électronique 8 provoque une rotation du rotor du moteur 7 qui prend une position angulaire déterminée par la position de la manette 11.

Les roues 1 et 2, qui sont liées à ce rotor du moteur 7 par l'intermédiaire de la roue 6, de la crémaillère 3 et des barres 4 et 5, pivotent donc autour des pivots 1a et, respectivement 2a et prennent une position angulaire également déterminée par la position de la manette 11.

Le dispositif de commande de direction du véhicule de la figure 1 ne comporte donc pas de volant. Il en découle que l'espace situé entre le tableau de bord et le conducteur du véhicule est libre. Il est donc possible de prévoir un seul coussin gonflable en cas d'accident pour protéger à la fois le conducteur et son passager, ce qui diminue le prix du dispositif de protection car le prix de revient d'un tel coussin unique est inférieur à la somme des prix de revient de deux coussins distincts.

En outre, ce coussin, lorsqu'il est vide et plié, peut être disposé dans un logement ménagé sur toute la largeur du tableau de bord.

Les dimensions de ce logement peuvent donc être choisies de manière que ce coussin, lorsqu'il est gonflé, occupe une partie de l'espace séparant le conducteur du tableau de bord plus importante que ce n'est le cas dans les véhicules connus, ce qui améliore la protection de ce conducteur en cas d'accident.

La figure 2 montre, en plus des éléments déjà cités, le tableau de bord 12 du véhicule et un logement 13 ménagé dans ce tableau de bord 12 pour recevoir le coussin de protection du conducteur et du passager du véhicule.

Dans l'exemple représenté à la figure 3, le capteur de position de la manette 11 de la figure 1 est constitué par un potentiomètre 14 dont le curseur 14a est relié mécaniquement à cette manette 11 et dont les bornes d'extrémité 14b et 14c sont respectivement reliées à une tension positive V+ et à une tension V- symétriques par rapport à la masse. Ces tensions V+ et V- sont fournies par une source de tension non représentée.

Le curseur 14a est relié à la manette 11 de manière à parcourir sensiblement tout le potentiomètre 14 lorsque cette manette 11 est déplacée de l'une de ses positions extrêmes à l'autre. Ainsi, dans l'une de ces positions extrêmes de la manette 11, par exemple celle qu'elle occupe lorsqu'elle est poussée vers la gauche contre sa butée, le curseur 14a est sensiblement à la tension V+, et dans l'autre de ces positions extrêmes, dans le même exemple celle qu'elle occupe lorsqu'elle est poussée complètement vers la droite, le curseur 14a est sensiblement à la tension V-.

Les moyens de rappel de la manette 11 dans sa position médiane mentionnés ci-dessus sont symbolisés par deux ressorts antagonistes 11a et 11b ayant chacun une première extrémité reliée à cette manette 11 et une deuxième extrémité reliée à un point fixe.

Le curseur 14a du potentiomètre 14 est relié électriquement à l'entrée 8a du circuit électronique 8,qui est elle-même reliée à l'entrée non-inverseuse 15a d'un amplificateur différentiel 15 qui fait partie de ce circuit électronique 8.

Dans le présent exemple, le circuit 8 comporte une deuxième entrée 8b qui est reliée d'une part à l'entrée inverseuse 15b de l'amplificateur 15 et d'autre part au curseur 16a d'un deuxième potentiomètre 16 dont les bornes d'extrémités 16b et 16c sont respectivement reliées aux mêmes tensions V+ et V- que les bornes 14b et 14c du potentiomètre 14.

Le curseur 16a du potentiomètre 16 est relié mécaniquement au moteur 7, le cas échéant par l'intermédiaire d'un train d'engrenages qui peut comporter une partie du train d'engrenages qui relie le moteur 7 à la roue dentée 6, de manière à parcourir sensiblement tout ce potentiomètre 16 lorsque les roues 1 et 2, non représentées dans cette figure 3, sont entraînées par le moteur 7 de l'une à l'autre de leurs positions angulaires extrêmes. Dans le cas du véhicule mentionné ci-dessus à titre d'exemple, où le curseur 14a du potentiomètre 14 est sensiblement à la tension V+ lorsque la manette 11 est complètement poussée vers la gauche, le curseur 16a du potentiomètre 16 est relié au moteur 7 de manière correspondante, c'est-à-dire de manière que ce curseur 16a soit également sensiblement à la tension V+ lorsque les roues 1 et 2 sont complètement tournées vers la gauche autour des pivots 1a et 2a, et également sensiblement à la tension V- lorsque ces roues 1 et 2 sont complètement tournées vers la droite.

De manière bien connue, la tension de la sortie 15c de l'amplificateur différentiel 15 est positive lorsque la tension de son entrée 15a est plus positive que la tension de son entrée 15b, négative dans le cas contraire, et nulle lorsque les tensions de ces entrées sont égales.

Le circuit électronique 8 comporte encore un amplificateur de puissance 16 dont l'entrée est reliée à la sortie 15c de l'amplificateur différentiel 15 et dont la sortie est reliée au moteur 7.

La structure de cet amplificateur 16 dépend évidemment de la nature du moteur 7 et ne sera pas décrite ici car la conception de cet amplificateur ne pose pas de problème à l'homme du métier connaissant ce moteur 7.

On mentionnera simplement que cet amplificateur 16 est agencé de manière que, selon que la tension à son entrée est positive ou négative, le rotor du moteur 7 tourne dans le sens qui provoque un pivotement des roues 1 et 2 vers la gauche ou vers la droite, ce rotor étant arrêté lorsque cette tension à l'entrée de cet amplificateur 16 est nulle.

Le fonctionnement du dispositif de la figure 3 ne sera pas décrit en détail car il est rendu évident par les explications qui précèdent. On notera simplement que ce dispositif réalise bien un asservissement de la position angulaire des roues 1 et 2 du véhicule à la position de la manette 11.

On notera également que le dispositif de la figure 3 peut très bien être utilisée dans un cas où la manette 11 est agencée de manière à se déplacer dans un plan sensiblement vertical et parallèle à l'axe longitudinal du véhicule, c'est-à-dire vers l'avant ou vers l'arrière. Dans un tel cas, le dispositif devra être agencé de manière que les roues 1 et 2 pivotent dans un premier sens lorsque la manette 11 est déplacée vers l'avant, et dans leur deuxième sens lorsque la manette 11 est déplacée vers l'arrière.

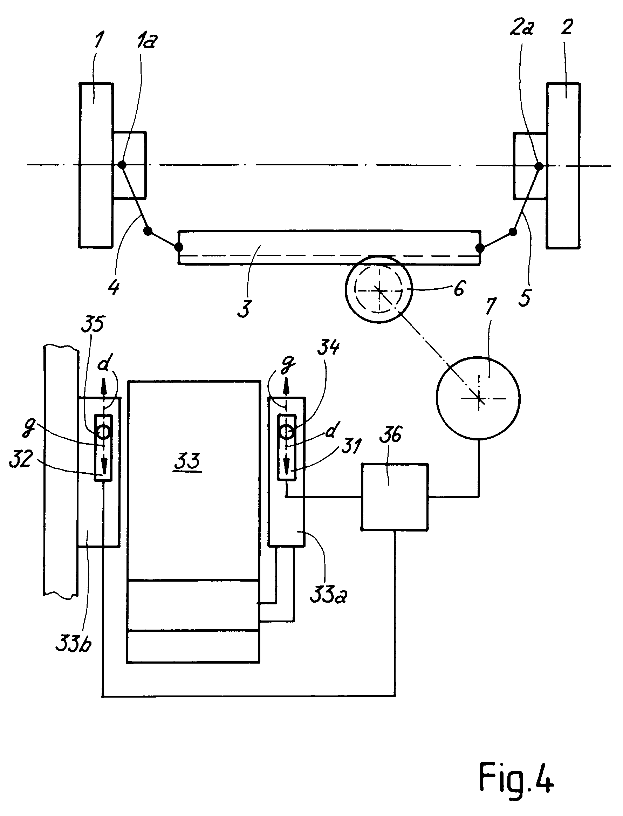

Le véhicule représenté schématiquement et partiellement à la figure 4 dans une vue de dessus comporte, comme celui de la figure 1, des roues directrices 1 et 2 qui sont couplées à une crémaillère 3 par des barres articulées 4 et 5, et les dents de la crémaillère 3 sont en prise avec une roue dentée 6 qui est couplée mécaniquement à un moteur électrique 7. Tous ces éléments sont semblables, voire même identiques, à ceux qui portent les mêmes références dans la figure 1 et ne seront pas décrits à nouveau ici.

Comme dans le cas de la figure 3, le moteur 7 est couplé mécaniquement à un détecteur de la position angulaire des roues 1 et 2, détecteur qui n'est pas représenté dans cette figure 4.

Le véhicule de la figure 4 comporte en outre deux dispositifs identiques 31 et 32 respectivement incorporés, dans cet exemple, à l'accoudoir de droite 33a et à l'accoudoir de gauche 33b du siège 33 du conducteur.

Les dispositifs 31 et 32 comportent chacun une manette 34, respectivement 35, qui s'étend vers le haut depuis la surface supérieure de l'accoudoir respectif, et qui est disposée de manière que le conducteur du véhicule peut la tenir facilement pour la déplacer manuellement vers l'avant ou vers l'arrière dans un plan sensiblement vertical et parallèle à l'axe longitudinal du véhicule, entre deux positions extrêmes déterminées par des butées non représentées.

Comme cela sera décrit en détail plus loin, chacun des dispositifs 31 et 32 comporte en outre un détecteur de la position de la manette correspondante 34 ou 35 et un moteur électrique dont le rotor est couplé mécaniquement à cette manette. Ces détecteurs de position et ces moteurs, qui ne sont pas visibles dans cette figure 4, sont reliés électriquement à un circuit électronique 36, de même que le moteur 7 et le capteur de position angulaire des roues 1 et 2 mentionnés ci-dessus.

Le circuit électronique 36, dont un exemple sera décrit en détail plus loin, est agencé de manière que tout déplacement de l'une des manettes 34 et 35 dans un sens ou dans l'autre provoque un déplacement de même amplitude mais de sens opposé de l'autre manette, ainsi qu'une rotation du rotor du moteur 7 dans un sens tel que les roues 1 et 2 pivotent vers la gauche lorsque la manette 34 est déplacée vers l'avant ou lorsque la manette 35 est déplacée vers l'arrière et tel que ces roues 1 et 2 pivotent vers la droite lorsque la manette 34 est déplacée vers l'arrière ou lorsque la manette 35 est déplacée vers l'avant.

En outre, tout pivotement des roues 1 et 2 vers la gauche ou vers la droite, dû par exemple à une irrégularité du sol sur lequel circule le véhicule, provoque un déplacement de la manette 34 vers l'avant et de la manette 35 vers l'arrière ou, respectivement, un déplacement de la manette 34 vers l'arrière et de la manette 35 vers l'avant.

Le circuit 36 réalise donc un couplage électrique des manettes 34 et 35 l'une avec l'autre et avec les roues 1 et 2, à l'aide des capteurs de position et des moteurs reliés mécaniquement à ces manettes 34 et 35 et à ces roues 1 et 2.

Ce couplage est réciproque, c'est-à-dire que chaque déplacement de l'un quelconque des trois éléments couplés, c'est-à-dire la manette 34, la manette 35 et les roues 1 et 2, provoque un déplacement bien défini des deux autres éléments.

Ainsi, non seulement le conducteur du véhicule peut diriger ce dernier à l'aide des manettes 34 et 35, mais ces dernières lui font sentir les réactions de son véhicule aux changements de direction qu'il lui impose et/ou à l'état du sol sur lequel il circule, ce qui lui donne une grande sensation de sécurité de conduite.

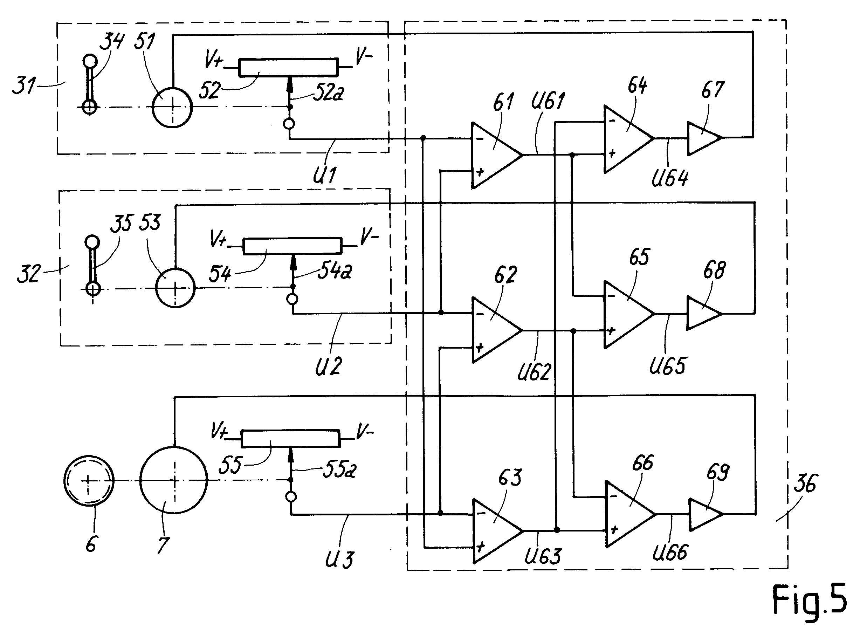

Dans l'exemple représenté par la figure 5, le dispositif 31 comporte un moteur 51 dont le rotor, non représenté séparément, est relié mécaniquement à la manette 34 et au curseur 52a d'un potentiomètre 52 qui constitue le détecteur de position de cette manette 34 et dont les bornes d'extrémité sont respectivement reliées à une tension positive V + et à une tension négative V-, ces deux tensions étant fournies par une source d'alimentation en énergie électrique non représentée.

Selon les cas, la manette 34 et/ou le curseur 52a du potentiomètre 52 peuvent être fixés directement sur l'arbre du rotor du moteur 51 ou être reliés à cet arbre par l'intermédiaire d'un train d'engrenages adéquat.

De même, le dispositif 32 comporte un moteur 53 dont le rotor, qui n'a pas non plus été représenté séparément, est relié mécaniquement directement ou par l'intermédiaire d'un train d'engrenages, à la manette 35 et au curseur 54a d'un potentiomètre 54 qui constitue le détecteur de position de cette manette 35 et dont les bornes d'extrémité sont également reliées respectivement aux tensions V + et V-.

Pour des raisons qui seront rendues évidentes par la suite de cette description, les moteurs 51 et 53 sont de préférence identiques, de même que les potentiomètres 52 et 54 et les liaisons mécaniques entre ces moteurs, les curseurs 52a et 54a de ces potentiomètres 52 et 54, et les manettes 34 et 35.

En outre, ces liaisons mécaniques doivent de préférence être agencées de manière que chaque curseur 52a et 54a parcourt sensiblement la totalité du potentiomètre 52 et respectivement 54 lorsque la manette correspondante 34, respectivement 35, est déplacée de l'une à l'autre de ses positions extrêmes.

De plus, les moteurs 51 et 53 ainsi que leurs liaisons mécaniques avec les manettes 34 et, respectivement, 35 et leur circuit d'alimentation doivent être dimensionnés de manière que, lorsque ces moteurs fournissent leur couple maximum, la force maximum qui s'exerce sur l'extrémité supérieure de ces manettes soit du même ordre de grandeur, ou plus faible, que la force que le conducteur d'un véhicule classique à direction assistée doit exercer sur le volant de ce véhicule pour lui faire changer de direction, ou que ce volant exerce sur les mains de ce conducteur lorsque les roues du véhicule touchent un obstacle ou passent dans un trou.

Toujours dans l'exemple de la figure 5, le rotor du moteur 7, qui n'a pas non plus été représenté séparément et qui est relié aux roues 1 et 2 par l'intermédiaire de la roue dentée 6 de la manière décrite précédemment, est également relié mécaniquement au curseur 55a d'un potentiomètre 55 qui constitue le détecteur de position angulaire des roues 1 et 2 et dont les bornes d'extrémité sont aussi respectivement reliées aux tensions V+ et V-. Dans ce cas également la liaison mécanique entre le rotor du moteur 7, la roue dentée 6 et/ou le curseur 55a du potentiomètre 55 peut être directe ou indirecte.

Le circuit électronique 36, également représenté dans cette figure 5, comporte trois amplificateurs différentiels 61, 62 et 63 dont les entrées non-inverseuses, désignées par un signe +, et les entrées inverseuses, désignées par un signe -, sont reliées aux curseurs 52a, 54a et 55a des potentiomètres 52, 54 et 55 de la manière indiquée.

Ce circuit électronique 36 comporte en outre trois autres amplificateurs différentiels 64, 65 et 66 dont les entrées non-inverseuses et inverseuses, également désignées par des signes + et respectivement -, sont reliées aux sorties des amplificateurs 61, 62 et 63 de la manière indiquée.

Tous les amplificateurs différentiels 61 à 66 sont alimentés par les mêmes tensions V+ et V- que celles qui sont appliquées aux bornes d'extrémité des potentiomètres 52, 54 et 55. En outre, pour une raison qui sera rendue évidente par la suite de cette description, ces amplificateurs 61 à 66 sont tous agencés de manière que leur tension de sortie soit égale à la différence des tensions appliquées à leurs entrées, avec une précision aussi bonne que possible. Les moyens destinés à donner cette caractéristique à ces amplificateurs 61 à 66 ne seront pas décrits ici car ils sont bien connus des spécialistes.

Le circuit électronique 36 comporte encore trois amplificateurs de puissance 67, 68 et 69 dont les entrées sont respectivement reliées aux sorties des amplificateurs 64, 65 et 66 et dont les sorties sont respectivement reliées aux moteurs 51, 53 et 7. Ces trois amplificateurs de puissance 67 à 69 sont bien entendu adaptés aux moteurs auxquels ils sont reliés, et ils sont en outre de préférence agencés de manière que le couple fourni par ces moteurs soit au moins sensiblement proportionnel à la tension appliquée à leur entrée. Dans la suite de cette description, le sens dans lequel tournent ces moteurs lorsque la tension appliquée à l'entrée de l'amplificateur 67, 68 ou 69 est positive sera qualifié arbitrairement de positif, et vice-versa.

Comme cela sera rendu évident par la suite de cette description, il est nécessaire, pour que le dispositif de la figure 5 fonctionne comme cela a été mentionné dans la description de la figure 4, que les liaisons électriques entre les amplificateurs 67, 68 et 69 et les moteurs 51, 53 et 7, ainsi que les liaisons mécaniques entre ces moteurs 51, 53 et 7 et les éléments qu'ils entraînent , c'est-à-dire respectivement la manette 34 et le curseur 52a, la manette 35 et le curseur 54a, et la roue dentée 6 et le curseur 55a, soient réalisées de manière qu'une rotation en sens positif du rotor du moteur 51, du moteur 53 ou du moteur 7 entraîne respectivement un déplacement de la manette 34 vers l'avant, un déplacement de la manette 35 vers l'arrière, et une rotation de la roue dentée 6 dans le sens qui provoque un pivotement vers la gauche des roues directrices 1 et 2, et que ces mêmes rotations de ces rotors entraînent un déplacement des curseurs 52a, 54a et 55a vers l'extrémité des potentiomètres 52, 54 et 55 qui est reliée à la tension V+, et vice-versa.

Dans la description du fonctionnement du circuit de la figure 5 qui va suivre, les tensions des curseurs 52a, 54a et 55a des potentiomètres 52, 54 et 55 seront respectivement désignées par U1, U2 et U3, et les tensions de sortie des amplificateurs 61 à 66 seront désignées par la lettre U suivie du numéro de référence de l'amplificateur concerné.

On voit facilement que, quelles que soient les tensions U1, U2 et U3 les tensions de sortie des amplificateurs 61 et 63 sont données par les équations :

$$U61 = U2 - U1$$
$$U62 = U3 - U2$$
$$\text{et } U63 = U1 - U3$$

De même, les tensions de sortie des amplificateurs 64 à 66 sont données par les équations :

$$U64 = U61 - U63 = U2 + U3 - 2U1 \quad (1)$$
$$U65 = U62 - U61 = U3 + U1 - 2U2 \quad (2)$$

et U66 = U63 - U62 = U1 + U2 - 2U3 (3)

Si les tensions U1, U2 et U3 sont égales, les tensions U64, U65 et U66 sont donc nulles, et les couples fournis par les moteurs 51, 53 et 7 sont également nuls. Le système est en équilibre.

Si maintenant le conducteur du véhicule déplace par exemple la manette 34 vers l'avant, la tension du curseur 52a augmente et prend une nouvelle valeur qui sera désignée par U1 + DU1.

La tension U64 appliquée à l'entrée de l'amplificateur 67 étant maintenant négative, le rotor du moteur 51 tend à tourner dans son sens négatif et donc à ramener la manette 34 vers sa position précédente. Le conducteur du véhicule doit donc exercer une certaine force sur cette manette 34 pour la maintenir dans sa nouvelle position.

La tension U65 appliquée à l'entrée de l'amplificateur 68 étant maintenant positive, le rotor du moteur 53 tend à tourner dans son sens positif et donc à déplacer la manette 35 vers l'arrière. Si le conducteur du véhicule ne s'oppose pas à ce déplacement, la tension du curseur 54a devient positive. Cette tension est évidemment variable tant que la manette 54a se déplace et sera appelée U2 + DU2, U2 étant sa valeur originale et DU2 représentant sa variation.

De même, la tension U66 appliquée à l'entrée de l'amplificateur 69 étant maintenant positive, le moteur 7 tend à tourner dans son sens positif et donc à faire pivoter les roues 1 et 2 vers la gauche. Si rien ne s'oppose à ce pivotement, la tension du curseur 55a devient également positive. Comme ci-dessus, cette tension est variable tant que les roues 1 et 2 pivotent et sera appelée U3 + DU3, U3 étant également sa valeur originale et DU3 représentant sa variation.

On voit facilement que lorsque la manette 35 et les roues 1 et 2 atteignent respectivement les positions où DU2 et DU3 sont égaux à DU1, les tensions U64, U65 et U66 deviennent à nouveau nulles.

Le système est donc à nouveau en équilibre, les roues 1 et 2 ayant pivoté vers la gauche d'un angle déterminé par l'amplitude du déplacement vers l'avant imposé par le conducteur du véhicule à la manette 34, et la manette 35 s'étant déplacée vers l'arrière d'une même quantité que cette manette 34.

Le fonctionnement du dispositif de la figure 5 dans le cas où le conducteur du véhicule déplace la manette 34 vers l'arrière se déduit facilement des explications données ci-dessus et ne sera donc pas décrit ici.

Il en est de même du fonctionnement du dispositif de la figure 5 dans les cas où le conducteur du véhicule déplace la manette 35 vers l'avant ou vers l'arrière, ou dans les cas où les roues 1 et 2 pivotent vers la gauche ou vers la droite sans que le conducteur du véhicule ne déplace les manettes 34 et 35, à cause par exemple d'une irrégularité du sol sur lequel circule le véhicule.

Le dispositif de la figure 5 assure donc un asservissement total et réciproque de la position des manettes 34 et 35 et des roues 1 et 2. Grâce à cette propriété de ce dispositif, le conducteur du véhicule peut non seulement diriger celui-ci, mais il ressent en permanence, par l'intermédiaire des manettes 34 et 35, les réactions de ce véhicule aux changements de direction qu'il lui impose et aux irrégularités du sol sur lequel il roule. Il en découle pour ce conducteur un grand sentiment de sécurité de conduite de son véhicule.

Cette sécurité de conduite du véhicule peut encore être augmentée en complétant le circuit électronique 36 de la figure 5 par des circuits de compensation adéquats respectivement disposés, par exemple, entre les sorties des amplificateurs 64 à 66 et les entrées des amplificateurs 67 à 69 et agencés de manière à éliminer tout risque d'oscillation du dispositif. De tels circuits de compensation peuvent être, par exemple, des circuits du type proportionnel-différentiel bien connu.

Ces circuits de compensation peuvent également être agencés, toujours par exemple, de manière à modifier les rapports respectifs entre les couples fournis par les moteurs 51, 53 et 7 et les signaux de sortie des amplificateurs 64, 65 et 66 en fonction de la vitesse du véhicule et/ou de l'amplitude du déplacement des manettes 34 et 35 ou du pivotement des roues 1 et 2.

Ces circuits de compensation ne seront pas décrits en détail ici parce que leur structure dépend évidemment de la fonction qu'ils doivent remplir, et que, connaissant cette fonction, l'homme du métier n'aura aucun problème particulier à résoudre pour les réaliser.

Le principe du dispositif de la figure 5 peut également s'appliquer à la commande de la direction d'un véhicule semblable à celui de la figure 1, c'est-à-dire qui ne comporte qu'une seule manette que le conducteur du véhicule peut déplacer vers la droite ou vers la gauche pour diriger son véhicule dans ces directions.

Dans un tel cas, le dispositif 32 n'existe évidemment pas, le circuit 36 ne comporte pas les amplificateurs 62, 65 et 68, l'entrée inverseuse de l'amplificateur 63 est reliée à l'entrée non-inverseuse de l'amplificateur 61 et la sortie de ce dernier est reliée à l'entrée inverseuse de l'amplificateur 66. En outre les liaisons électriques et mécaniques entre les divers composants doivent évidemment être agencées de manière que tout déplacement de la manette 34 vers la gauche ou vers la droite provoque un pivotement correspondant des roues 1 et 2, et réciproquement.

Le même principe peut également s'appliquer à le commande de la direction d'un véhicule comportant plus de deux roues directrices, comme certaines voitures disponibles actuellement qui comportent quatre roues directrices, ou comme certains véhicules spéciaux destinés à transporter des charges très longues, qui peuvent comprendre un assez grand nombre de ces roues directrices.

Dans de tels cas, chaque paire de roues directrices doit être couplée à un ensemble comportant un moteur semblable au moteur 7 et un détecteur de position angulaire semblable au potentiomètre 55. En outre, le circuit électronique du dispositif de commande doit comporter, pour chacune de ces paires de roues directrices, un amplificateur de puissance, semblable à l'amplificateur 69 de la figure 5, relié au moteur commandant le pivotement de ces roues directrices, et un circuit de calcul similaire aux circuits formés, chacun, par les amplificateurs 61 et 64, 62 et 65, et 63 et 66 de la figure 5.

Si le nombre total d'organes mobiles, c'est-à-dire de manettes de commande manuelle et de paires de roues directrices, qui doivent être asservis les uns aux autres est désigné par N, on voit que chaque circuit de calcul doit être agencé de manière à appliquer à l'amplificateur de puissance qui lui est associé un signal égal à la différence entre, d'une part, la somme de tous les signaux produits par les détecteurs de position des N organes mobiles et, d'autre part, N fois le signal produit par le détecteur de position lié au moteur commandé par cet amplificateur de puissance.

D'une manière équivalente, qui correspond d'ailleurs à la manière dont les équations (1) à (3) ci-dessus ont été écrites, on peut dire que chaque circuit de calcul doit fournir à l'amplificateur de puissance qui lui est lié un signal égal à la différence entre, d'une part, la somme des signaux fournis par les (N-1) détecteurs de position liés aux (N-1) moteurs qui ne sont pas commandés par cet amplificateur et, d'autre part, (N-1) fois le signal fourni par le détecteur de position lié au moteur commandé par cet amplificateur.

Un exemple d'un tel dispositif de commande de direction d'un véhicule comportant plus de trois organes mobiles, manettes de commande et paires de roues directrices, asservis les uns aux autres, ne sera pas décrit ici car sa réalisation découle aisément des explications données ci-dessus.

Les modifications qui peuvent être apportées au dispositif décrit ci-dessus sans pour autant que celui-ci sorte du cadre de l'invention sont extrêmement nombreuses, et ou n'en mentionnera ci-dessous que quelques unes, à titre d'exemple non limitatif.

Ainsi, les divers potentiomètres qui, dans le dispositif décrit ci-dessus, constituent les détecteurs de position des éléments mobiles, peuvent avantageusement être remplacés par des détecteurs de position sans contact mécanique tels que des détecteurs capacitifs ou inductifs, pour éliminer les problèmes qui peuvent être causés, dans ces potentiomètres, par l'usure du curseur et/ou de l'élément résistif sur lequel frotte ce curseur.

Ces détecteurs de position, qui délivrent des signaux analogiques, peuvent également être avantageusement remplacés par des détecteurs de position délivrant des signaux de type numérique, c'est-à-dire des signaux formés de suites d'impulsions transmises sur un conducteur unique ou des signaux transmis en parallèle sur une pluralité de conducteurs et représentant chacun un bit d'un nombre binaire. Les circuits de calcul, également analogiques, constitués par les divers amplificateurs différentiels décrits ci-dessus, doivent alors évidemment être remplacés par des circuits de calcul numérique adéquats qui ne seront pas décrits ici car leur réalisation ne pose aucun problème à l'homme du métier.

De même, les manettes 11, 34 et 35 peuvent avoir une forme différente de celle qui a été représentée dans les figures. Ces manettes 11, 34 et 35 peuvent aussi être reliées mécaniquement aux dispositifs 9, 31 et 32 respectifs de manière à se déplacer parallèlement à elles-mêmes et non pas en pivotant autour d'un axe comme cela est représenté dans les figures.

Le dispositif selon l'invention peut également être agencé sans difficulté de manière à pouvoir être alimenté par deux tensions non symétriques par rapport à la masse, voire même par une seule tension positive ou négative par rapport à la masse. L'avantage d'un dispositif agencé de cette dernière manière réside dans le fait que le circuit destiné à fournir cette tension unique est nettement plus simple qu'un circuit devant fournir deux tensions distinctes.

La présente invention s'applique aussi sans difficulté au cas où les roues directrices du véhicule sont situées à l'arrière de celui-ci. Dans un tel cas, le moteur correspondant au moteur 7 des exemples décrits ci-dessus doit évidemment être relié à son circuit de commande et/ou à ces roues de manière que, dans toutes les circonstances, ces roues pivotent dans le sens opposé à celui où elles pivotent dans ces exemples.

On notera aussi que la présente invention s'applique sans changement au cas d'un véhicule ne comportant qu'une seule roue directrice disposée au milieu de la partie avant ou de la partie arrière du véhicule, seuls les moyens de liaison mécanique de cette roue unique au moteur destiné à la faire pivoter vers la gauche ou vers la droite étant, le cas échéant, différents de ceux qui ont été décrits ci-dessus dans le cas des véhicules à deux roues directrices.

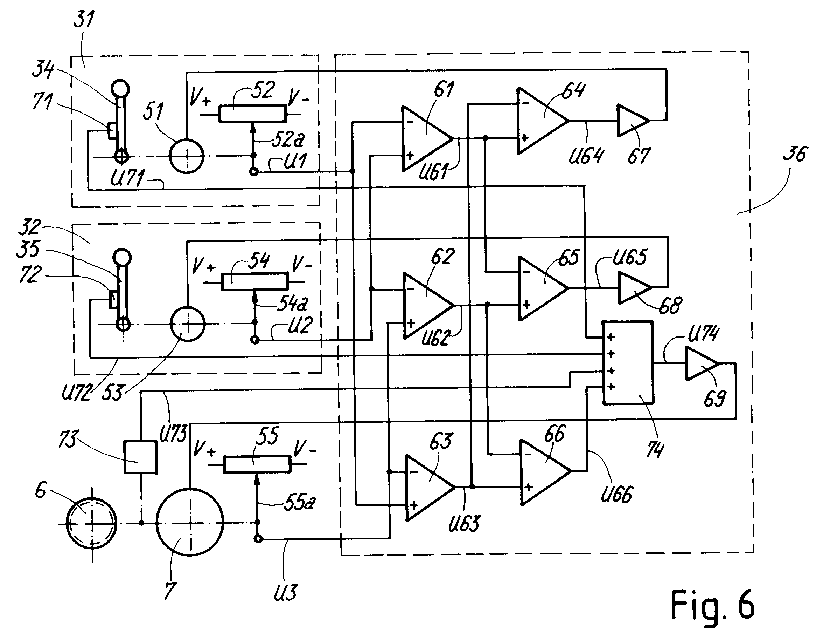

Tous les composants du dispositif de commande de direction d'un véhicule représenté à la figure 5 se retrouvent, avec les mêmes références, dans le dispositif représenté à la figure 6 et ne seront donc pas décrits à nouveau ici. Ces composants sont également reliés les uns aux autres comme dans le dispositif de la figure 5, à l'exception des amplificateurs 66 et 69 dont la sortie et, respectivement, l'entrée ne sont plus reliées directement comme cela sera décrit plus loin.

En plus de ces composants, le dispositif de la figure 6 comporte deux capteurs 71 et 72 délivrant chacun un signal électrique ayant une valeur représentative de la force exercée sur la manette 34 et, respectivement, sur la manette 35 par le conducteur du véhicule dans la direction des flèches d ou g de la figure 4 pour diriger ce véhicule.

Chacun de ces capteurs 71 et 72 est constitué, dans cet exemple, par une jauge de contrainte associée à un amplificateur adéquat et fixée directement sur la manette 34 et, respectivement, sur la manette 35. Cette jauge de contrainte et cet amplificateur n'ont pas été représentés séparément.

Chacun des capteurs 71 et 72 peut aussi être constitué, de manière bien connue, par deux jauges de contrainte montées de part et d'autre de la manette 34 et, respectivement, de la manette 35 et associées à un amplificateur différentiel.

La ou les jauges de contrainte de chaque capteur 71 et 72 peuvent également être fixées sur l'arbre du rotor du moteur 51 et, respectivement, du moteur 53 ou, si ces moteurs 51 et 53 sont reliés aux manettes 34 et 35 par des trains d'engrenages, sur l'arbre de l'une quelconque des roues dentées constituant ces trains d'engrenages.

Dans de telles formes d'exécution, qui n'ont pas été représentées car leur réalisation ne pose aucun problème à l'homme du métier, la valeur du signal délivré par chacun des capteurs 71 et 72 est représentative du couple transmis par l'arbre sur lequel la ou les jauges de contrainte sont fixées. Mais comme ce couple est évidemment proportionnel à la force exercée sur la manette 34 ou 35 correspondante, la valeur du signal délivré par le capteur 71 ou le capteur 72 est également représentative de cette force.

Le dispositif de la figure 6 comporte également un capteur 73 délivrant un signal électrique ayant une valeur resprésentative du couple qui tend à faire pivoter les roues 1 et 2 du véhicule autour de leurs pivots 1a et 2a (voir la figure 4).

Ce capteur 73 peut être constitué, par exemple, par une jauge de contrainte fixée sur l'arbre du rotor du moteur 7 et associée à un amplificateur adéquat.

Si le moteur 7 est relié à la roue dentée 6 (figure 4) par un train d'engrenages, la jauge de contrainte du capteur 73 peut évidemment être fixée sur l'arbre de l'une quelconque des roues dentées constituant ce train d'engrenages.

Cette jauge de contrainte peut également être fixée sur l'une ou l'autre des barres de direction 4 et 5 qui relient la crémaillère 3 aux roues 1 et 2, ou sur cette crémaillère 3 (voir la figure 4).

Dans un telle forme d'exécution, qui n'a pas été représentée car sa réalisation ne pose pas de problème à l'homme du métier, la valeur du signal produit par le capteur 73 est représentative de la force exercée sur l'élément auquel la jauge de contrainte est fixée. Mais comme cette force est évidemment proportionnelle au couple qui tend à faire pivoter les roues 1 et 2 autour de leurs pivots 1a et 2a, la valeur du signal produit par le capteur 73 est également représentative de ce couple.

On admettra dans la suite de cette description que les signaux produits par les capteurs 71, 72 et 73 sont constitués par des tensions, qui seront respectivement désignées par les références U71, U72 et U73.

Le circuit de calcul 36 du dispositif de la figure 6 comporte encore un circuit additionneur 74 ayant quatre entrées reliées respectivement aux capteurs 71, 72 et 73 et à la sortie de l'amplificateur 66, ainsi qu'une sortie reliée à l'entrée de l'amplificateur 69. Ce circuit additionneur 74 est un circuit bien connu des spécialistes et ne sera donc pas décrit ici, sinon pour mentionner que la tension U74 qu'il fournit à sa sortie, et donc à l'entrée de l'amplificateur 69, est donnée par l'équation :

$$U74 = U66 + U71 + U72 + U73 \qquad (4)$$

Il faut noter ici que les équations (1), (2) et (3) mentionnées ci-dessus dans la description du fonctionnement du dispositif de la figure 5 sont également valables dans le cas du dispositif de la figure 6, puisque, dans ces deux dispositifs, les amplificateurs 61 à 66 et les détecteurs de position constitués par les potentiomètres 52, 54 et 55 sont identiques et sont reliés entre eux de la même manière. On peut donc remplacer le terme U66 de l'équation (4) ci-dessus par sa valeur donnée par l'équation (3) pour obtenir l'équation suivante :

$$U74 = U1 + U2 - 2U3 + U71 + U72 + U73 \,(5)$$

On admettra également que les capteurs 71 et 72 sont agencés de manière que les tensions U71 et U72 sont positives lorsque le conducteur du véhicule exerce sur la manette 34 et, respectivement, sur la manette 35, une force qui tend à déplacer cette manette 34 ou 35 dans le sens des flèches désignées par g à la figure 4, c'est-a-dire lorsque ce conducteur désire faire tourner son véhicule vers la gauche, et que le moteur 51 ou 53 correspondant produit un couple qui s'oppose à ce déplacement, c'est-à-dire un couple qui tend à déplacer ces manettes dans le sens des flèches d de la figure 4. On rappelera que, en utilisant les mêmes conventions que dans le cas de la figure 5, les moteurs 51 et 53 produisent un tel couple lorsque les tensions U64 et, respectivement, U65 sont négatives.

On admettra encore que le capteur 73 est agencé de manière que la tension U73 est positive lorsque les roues 1 et 2 sont soumises à un couple, dû par exemple à la réaction du sol sur lequel elles roulent, qui tend à les faire pivoter vers la gauche autour de leurs pivots 1a et 2a (figure 4), et que le moteur 7 produit un couple qui s'oppose à ce pivotement. En utilisant à nouveau les mêmes conventions que dans le cas de la figure 5, le moteur 7 produit un tel couple lorsque la tension appliquée à l'entrée de l'amplificateur 69 est négative.

Le fonctionnement du dispositif de la figure 6 étant très complexe et dépendant des caractéristiques respectives et chacun de ses composants, il ne sera décrit ci-après que de manière très générale. En outre, pour simplifier cette description, on admettra que le conducteur du véhicule équipé de ce dispositif n'agit que sur la manette 34 pour diriger ce véhicule et n'exerce donc aucune force sur la manette 35. La tension U72 est donc toujours nulle dans cet exemple.

Lorsque ce véhicule roule en ligne droite sur un sol parfaitement plat, les tensions U1 à U3 et U71 à U73 sont évidemment nulles. Les équations (1), (2) et (5) ci-dessus montrent que les tensions U64, U65 et U74 sont alors également nulles. Les moteurs 51, 53 et 7 ne produisent donc aucun couple.

Si le conducteur du véhicule désire alors le faire tourner vers la gauche, par exemple, il agit sur la manette 34 pour la déplacer dans le sens de la flèche g partant de cette manette 34 dans la figure 4.

La tension U1 tend alors à devenir positive, de sorte que, comme le montre l'équation (1), la tension U64 tend à devenir négative. Le moteur 51 crée donc un couple qui s'oppose au déplacement de la manette 34.

Si le gain de l'amplificateur 67 est élevé, ce qui est souhaitable pour une raison qui sera donnée plus loin, ce couple est également élevé, de sorte que la manette 34 ne se déplace pratiquement pas, la tension U1 restant donc très faible.

Mais, simultanément, la force exercée par le conducteur du véhicule sur la manette 34 et le couple produit par le moteur 51 qui vient d'être décrit ont pour effet que la tension U71 produite par le capteur 71 devient positive.

L'équation (5) montre que la tension U74 devient alors aussi positive. Le moteur 7 commence alors à tourner dans le sens qui provoque un pivotement vers la gauche des roues 1 et 2 autour de leurs pivots 1a et 2a (figure 4).

La tension U3 devient donc positive, ce qui a notamment pour effet que, comme le montre l'équation (1), la tension U64 devient moins négative, voire même positive. Le couple produit par le moteur 51 et qui s'opposait au déplacement de la manette 34 diminue donc, voire même change de sens, de sorte que cette manette 34 peut maintenant se déplacer en réponse à la force exercée sur elle par le conducteur du véhicule.

Mais suite à ce déplacement de la manette 34, la tension U1 devient plus positive, de sorte que la tension U64 devient à nouveau plus négative et que le couple produit par le moteur 51 dans le sens qui s'oppose à ce déplacement augmente à nouveau.

Le fait que la tension U1 devient plus positive tend à rendre la tension U74 également plus positive, mais cette variation de la tension U74 est contrebalancée par l'augmentation de la tension U3 et par le fait que, dans le même temps, le pivotement des roues 1 et 2 vers la gauche a pour effet que la tension U73 produite par le capteur 73 devient négative puisque le sol sur lequel roulent ces roues 1 et 2 produit par réaction un couple qui s'oppose à leur pivotement.

On conçoit que, un certain temps, assez court, après que le conducteur du véhicule a commencé à agir sur la manette 34, le dispositif prend un état stable.

Des considérations théoriques qui ne seront pas reproduites ici montrent que, dans cet état stable, la tension U74 est toujours positive, sa valeur étant telle que le couple produit par le moteur 7 équilibre exactement celui que le sol exerce par réaction sur les roues 1 et 2.

En outre, ce couple de réaction empêche les roues 1 et 2 d'atteindre la position angulaire dans laquelle la tension U3 serait égale à la tension U1. Cette tension U3 est donc inférieure à cette tension U1.

D'autre part, puisque, dans le présent exemple, le conducteur du véhicule n'agit pas sur la manette 35, cette dernière prend une position dans laquelle la tension U65 est nulle.

L'équation (2) montre que, dans ce cas, la tension U2 est égale à la moyenne des tensions U1 et U3 ou, en d'autre termes, que

$$U2 = \frac{U1 + U3}{2}$$

En reportant cette valeur dans l'équation (1), on voit que

$$U64 = \frac{3U3 - 3U1}{2}$$

Les tensions U1 et U3 étant toutes deux positives et la première étant supérieure à la deuxième comme on l'a vu ci-dessus, cette tension U64 est négative, c'est-à-dire que le moteur 51 crée un couple qui tend à déplacer la manette 34 dans la direction de la flèche d partant de cette manette 34 dans la figure 4. Le conducteur du véhicule doit donc exercer en permanence une force sur cette manette 34 pour la maintenir dans la position voulue, et la tension U71 reste positive.

On voit facilement que, dans l'équation (5), le terme (U1 + U2 - 2U3) est positif. D'autre part, comme on l'a vu ci-dessus, la tension U71 est positive, la tension U72 est nulle, et la tension U73 est négative. Le terme (U71 + U72 + U73) de l'équation (5) est donc positif ou négatif selon que la valeur absolue de la tension U73 est respectivement plus petite ou plus grande que la tension U71.

Cependant, le dispositif de la figure 6 étant en équilibre et la tension U74 étant forcément positive, on voit que si ce terme (U71 + U72 + U73) est négatif, sa valeur absolue est inférieure à la valeur du terme (U1 + U2 - 2U3).

Cet état du dispositif de la figure 6 reste stable tant que le conducteur du véhicule maintient la manette 34 dans la même position et que le sol sur lequel roulent les roues 1 et 2 est parfaitement plat.

On voit facilement que si le conducteur change la position de la manette 34 pour modifier la trajectoire du véhicule, le dispositif prend un autre état stable, dépendant de la nouvelle position de cette manchette 34.

En outre, si le couple de pivotement que le sol exerce par réaction sur les roues 1 et 2 se modifie, par exemple par suite d'une modification de la vitesse du véhicule, le dispositif prend également un nouvel état stable dépendant de la nouvelle valeur de couple. Notamment, si le conducteur du véhicule veut maintenir ce dernier sur la même trajectoire, il doit modifier en conséquence la force qu'il exerce sur la manette 34.

Il est évident que des considérations analogues peuvent être faites dans le cas où le conducteur du véhicule désire faire tourner ce dernier vers la droite et exerce donc sur la manette 34 une force dirigée dans le sens de la flèche d partant de cette manette 34 dans la figure 4, ainsi que dans le cas où ce conducteur agit uniquement sur la manette 35 pour diriger son véhicule, ou bien dans les cas où il agit simultanément sur les deux manettes 34 et 35.

En pratique, un état stable tel que celui qui a été décrit ci-dessus n'est que rarement atteint car, d'une part, la trajectoire d'un véhicule n'est presque jamais exactement circulaire pendant un temps relativement long et, d'autre part, le sol sur lequel roulent les roues de ce véhicule n'est presque jamais parfaitement plat.

On voit cependant que, dans toutes les situations, le conducteur du véhicule garde un très bon contrôle de la direction de celui-ci puisque chaque modification de la position de la manette 34 et/ou de la manette 35 entraîne une modification correspondante de la position angulaire des roues 1 et 2, et réciproquement.

Les équations (1) à (3) utilisées ci-dessus pour expliquer le fonctionnement du dispositif de la figure 5 montrent, comme cela a déjà été mentionné, que tout déplacement de l'un des organes mobiles, c'est-à-dire des manettes 34 ou 35 ou des roues 1 et 2, a pour effet que la tension U64, U65 ou U66 appliquée à l'entrée de l'amplificateur 67, 68 ou 69 fournissant le signal de commande du moteur 51, 53 ou 7 lié à cet organe mobile prend une valeur telle que ce moteur 51, 53 ou 7 crée un couple qui s'oppose à ce déplacement de cet organe mobile.

On voit donc que, dans le cas de ce dispositif de la figure 5, le gain des amplificateurs 67 à 69 ne doit pas être trop élevé, car sinon plus aucun déplacement de l'un ou l'autre des organes mobiles ne serait possible, le dispositif étant alors pratiquement bloqué.

Mais si le gain des amplificateurs 67 à 69 est suffisamment faible pour que le dispositif de la figure 5 puisse fonctionner, l'asservissement de la position de chacun des organes mobiles à la position des autres organes mobiles devient imprécis, comme si les liaisons entre ces organes mobiles avaient une certaine élasticité.

Dans le dispositif de la figure 6, par contre, la présence des capteurs de force ou de couple 71 à 73 et le fait que les signaux U71 à U73 fournis par ces capteurs sont combinés au signal U66 dans l'additionneur 74 de la manière décrite ci-dessus pour fournir le signal de commande du moteur 7 a pour effet que le gain des amplificateurs 67 à 69 peut être très élevé, ce qui donne à l'asservissement réciproque des divers mobiles une très grande précision, sans pour autant que le dispositif ne se bloque.

En effet, même si ce gain des amplificateurs 67 à 69 est très élevé, toute variation de la force ou du couple exercé sur l'un des organes mobiles provoque une variation de la tension U74 et, en cascade, de la position angulaire des roues 1 et 2, de la tension U3, des tensions U64 et U65, et de la position des manettes 34 et 35.

Dans d'autres formes d'exécution du dispositif selon la présente invention, celui-ci comporte exactement les mêmes composants que le dispositif de la figure 6, mais la sortie de l'amplificateur 66 est reliée directement à l'entrée de l'amplificateur 69. En outre, la sortie de l'additionneur 74 est reliée, dans un premier cas, à l'entrée de l'amplificateur 67 et, dans un deuxième cas, à l'entrée de l'amplificateur 68, trois des entrées de cet additionneur 74 étant reliées respectivement aux capteurs de force ou de couple 71, 72 et 73, et sa quatrième entrée étant reliée, dans le premier cas ci-dessus, à la sortie de l'amplificateur 64 et, dans le deuxième cas ci-dessus, à la sortie de l'amplificateur 65.

L'homme du métier verra sans difficulté que le fonctionnement de ces deux autres formes d'exécution du dispositif selon l'invention, qui n'ont pas été représentées, est analogue à celui du dispositif de la figure 6, et qu'elles présentent les mêmes avantages que ce dernier.

Il est évident que toutes les modifications qui peuvent être apportées au dispositif de la figure 5 et dont certaines ont été mentionnées dans la description de celui-ci peuvent également être apportées au dispositif de la figure 6. Ces modifications ne seront donc pas mentionnées ici.

## Revendications

1. Dispositif de commande de direction d'un véhicule comportant au moins une roue directrice (1, 2) mobile angulairement par rapport à un axe de pivotement (1a, 2a) pour déterminer la direction de déplacement dudit véhicule, ledit dispositif comportant des moyens de commande (34; 34, 35) comprenant au moins une première manette (34) mobile dans un premier plan et actionnable manuellement par le conducteur dudit véhicule pour diriger ledit véhicule et des moyens d'asservissement couplés auxdits moyens de commande (34; 34, 35) et à ladite roue (1, 2) pour asservir la position angulaire de ladite roue (1, 2) autour dudit axe de pivotement (1a, 2a) à la position de ladite manette (34) et agencés de manière à provoquer un pivotement de ladite roue (1, 2) dans un premier et dans un deuxième sens en réponse à un déplacement de ladite manette (34) dans un premier et, respectivement, dans un deuxième sens dans ledit premier plan et à provoquer un déplacement de ladite manette (34) dans son premier et dans son deuxième sens en réponse à un pivotement de ladite roue (1, 2) dans son premier et, respectivement, dans son deuxième sens, lesdits moyens d'asservissement comportant :
   - un premier moteur (51) couplé mécaniquement à ladite manette (34) et des moyens (67) couplés électriquement audit premier moteur (51) pour provoquer un déplacement de ladite manette (34) dans ledit premier plan, par l'intermédiaire dudit premier moteur (51), en réponse à un premier signal de commande (U64), l'amplitude et le sens du déplacement de ladite manette (34) étant dépendants de la valeur dudit premier signal de commande (U64);
   - un premier détecteur de position (52) couplé mécaniquement à ladite manette (34) pour produire un premier signal de détection (U1) représentatif de la position de ladite manette (34) dans ledit plan;
   - un deuxième moteur (7) couplé mécaniquement à ladite roue (1, 2) et des moyens (69) couplés électriquement audit deuxième moteur (7) pour provoquer un pivotement de ladite roue (1, 2), par l'intermédiaire dudit deuxième moteur (7), en réponse à un deuxième signal de commande (U66; U74), l'amplitude et le sens dudit pivotement de ladite roue (1, 2) étant dépendants de la valeur dudit deuxième signal de commande (U66; U74); caractérisé par le fait que lesdits moyens d'asservissement comportent :
   - un deuxième détecteur de position (55) couplé mécaniquement à ladite roue (1, 2) pour produire un deuxième signal de détection (U3) représentatif de la position angulaire de ladite roue (1, 2); et
   - des moyens de calcul (61, 63, 64, 66; 61, 63, 64, 66, 74; 61 à 66; 61 à 66, 74) pour produire ledit premier signal de commande (U64) et ledit deuxième signal de commande (U66; U74) en fonction dudit premier signal de détection (U1) et dudit deuxième signal de détection (U3).

2. Dispositif selon la revendication 1, caractérisé par le fait que ledit premier plan est sensiblement perpendiculaire à l'axe longitudinal dudit véhicule.

3. Dispositif selon la revendication 1, caractérisé par le fait que lesdits moyens de calcul (61, 63, 64, 66) sont agencés de manière à produire ledit premier signal de commande (U64) avec une valeur égale à la différence entre ledit deuxième signal de détection (U3) et ledit premier signal de détection (U1) et à produire ledit deuxième signal de commande (U66) avec une valeur égale à la différence entre ledit premier signal de détection (U1) et ledit deuxième signal de détection (U3).

**4.** Dispositif selon la revendication 1, caractérisé par le fait que lesdits moyens d'asservissement comportent en outre :

- un premier capteur (71) couplé à ladite manette (34) pour produire un troisième signal de détection (U71) représentatif d'une force exercée sur ladite manette (34);
- un deuxième capteur (73) couplé à ladite roue (1, 2) pour produire un quatrième signal de détection (U73) représentatif d'un couple de pivotement exercé sur ladite roue (1, 2);

    et que lesdits moyens de calcul (61, 63, 64, 66, 74) sont agencés de manière à produire ledit premier signal de commande (U64) avec une valeur égale à la différence entre ledit deuxième (U3) et ledit premier signal de détection (U1) et à produire ledit deuxième signal de commande (U74) avec une valeur égale à la somme de la différence entre ledit premier (U1) et ledit deuxième signal de détection (U3), dudit troisième signal de détection (U71) et dudit quatrième signal de détection (U73).

**5.** Dispositif selon la revendication 1, caractérisé par le fait que lesdits moyens d'asservissement comportent en outre :

- un premier capteur (71) couplé à ladite manette (34) pour produire un troisième signal de détection (U71) représentatif d'une force exercée sur ladite manette (34);
- un deuxième capteur (73) couplé à ladite roue (1, 2) pour produire un quatrième signal de détection (U73) représentatif d'un couple de pivotement exercé sur ladite roue (1, 2);

    et que lesdits moyens de calcul (61, 63, 64, 66, 74) sont agencés de manière à produire ledit premier signal de commande (U64) avec une valeur égale à la somme de la différence entre ledit deuxième (U3) et ledit premier signal de détection (U1), dudit troisième signal de détection (U71) et dudit quatrième signal de détection (U73), et à produire ledit deuxième signal de commande (U74) avec une valeur égale à la différence entre ledit premier (U1) et ledit deuxième signal de détection (U3).

**6.** Dispositif selon la revendication 1, caractérisé par le fait que ledit premier plan est sensiblement parallèle à l'axe longitudinal dudit véhicule, que lesdits moyens de commande comportent une deuxième manette (35) mobile dans un deuxième plan au moins sensiblement parallèle audit premier plan, que lesdites première et deuxième manettes (34, 35) sont respectivement disposées de part et d'autre dudit conducteur qui peut les déplacer manuellement dans un premier sens vers l'avant dudit véhicule et dans un deuxième sens vers l'arrière dudit véhicule dans ledit premier et, respectivement, ledit deuxième plan, et que lesdits moyens d'asservissement sont en outre agencés de manière à provoquer :

- un pivotement de ladite roue (1, 2) dans son premier sens et dans son deuxième sens en réponse à un déplacement de ladite deuxième manette (35) dans son deuxième sens et, respectivement, dans son premier sens;
- un déplacement de ladite deuxième manette (35) dans son premier et dans son deuxième sens en réponse à un pivotement de ladite roue (1, 2) dans son deuxième et, respectivement, dans son premier sens; et
- un déplacement de l'une desdites première et deuxième manettes (34, 35) dans son premier et son deuxième sens en réponse à un déplacement de l'autre desdites manettes (34, 35) dans son deuxième et, respectivement, son premier sens.

**7.** Dispositif selon la revendication 6, caractérisé par le fait que lesdits moyens d'asservissement comportent en outre :

- un troisième moteur (53) couplé mécaniquement à ladite deuxième manette (35) et des moyens (68) couplés électriquement audit troisième moteur (53) pour provoquer un déplacement de ladite deuxième manette (35) dans ledit deuxième plan, par l'intermédiaire dudit troisième moteur (53), en réponse à un troisième signal de commande (U65), l'amplitude et le sens du déplacement de ladite deuxième manette (35) étant dépendants de la valeur dudit troisième signal de commande (U65);
- un troisième détecteur de position (54) couplé mécaniquement à ladite deuxième manette (35) pour produire un troisième signal de détection (U2) représentatif de la position de ladite deuxième manette (35) dans ledit deuxième plan;

    et que lesdits moyens de calcul (61 à 66) sont agencés de manière à produire :

- ledit premier signal de commande (U64) avec une valeur égale à la différence entre, d'une part, la somme desdits deuxième (U3) et troisième (U2) signaux de détection et, d'autre part, deux fois ledit premier signal de détection (U1);
- ledit deuxième signal de commande (U66) avec une valeur égale à la différence entre, d'une part, la somme desdits premier (U1) et troisième (U2) signaux de détection et, d'autre part, deux fois ledit deuxième signal de détection (U3); et
- ledit troisième signal de commande (U65) avec une valeur égale à la différence entre, d'une part, la somme desdits premier (U1) et deuxième (U3) signaux de détection et, d'autre part, deux fois ledit troisième signal de détection (U2).

8. Dispositif selon la revendication 6, caractérisé par le fait que lesdits moyens d'asservissement comportent en outre :
    - un troisième moteur (53) couplé mécaniquement à ladite deuxième manette (35) et des moyens (68) couplés électriquement audit troisième moteur (53) pour provoquer un déplacement de ladite deuxième manette (35) dans ledit deuxième plan, par l'intermédiaire dudit troisième moteur (53), en réponse à un troisième signal de commande (U65), l'amplitude et le sens du déplacement de ladite deuxième manette (35) étant dépendants de la valeur dudit troisième signal de commande (U65);
    - un troisième détecteur de position (54) couplé mécaniquement à ladite deuxième manette (35) pour produire un troisième signal de détection (U2) représentatif de la position de ladite deuxième manette (35) dans ledit deuxième plan;
    - un premier capteur (71) couplé à ladite première manette (34) pour produire un quatrième signal de détection (U71) représentatif d'une force exercée sur ladite première manette (34);
    - un deuxième capteur (72) couplé à ladite deuxième manette (35) pour produire un cinquième signal de détection (U72) représentatif d'une force exercée sur ladite deuxième manette (35);
    - un troisième capteur (73) couplé à ladite roue (1, 2) pour produire un sixième signal de détection (U73) représentatif d'un couple de pivotement exercé sur ladite roue (1, 2);

    et que lesdits moyens de calcul (61 à 66, 74) sont agencés de manière à produire :
- ledit premier signal de commande (U64) avec une valeur égale à la différence entre, d'une part, la somme desdits deuxième (U3) et troisième (U2) signaux de détection et, d'autre part, deux fois ledit premier signal de détection (U1);
- ledit deuxième signal de commande (U74) avec une valeur égale à la différence entre, d'une part, la somme desdits premier (U1), troisième (U2), quatrième (U71), cinquième (U72) et sixième (U73) signaux de détection et, d'autre part, deux fois ledit deuxième signal de détection (U3); et
- ledit troisième signal de commande (U65) avec une valeur égale à la différence entre, d'une part, la somme desdits premier (U1) et deuxième (U3) signaux de détection et, d'autre part, deux fois ledit troisième signal de détection (U2).

9. Dispositif selon la revendication 6, caractérisé par le fait que lesdits moyens d'asservissement comportent en outre :
    - un troisième moteur (53) couplé mécaniquement à ladite deuxième manette (35) et des moyens (68) couplés électriquement audit troisième moteur (53) pour provoquer un déplacement de ladite deuxième manette (35) dans ledit deuxième plan, par l'intermédiaire dudit troisième moteur (53), en réponse à un troisième signal de commande (U65), l'amplitude et le sens du déplacement de ladite deuxième manette (35) étant dépendants de la valeur dudit troisième signal de commande (U65);
    - un troisième détecteur de position (54) couplé mécaniquement à ladite deuxième manette (35) pour produire un troisième signal de détection (U2) représentatif de la position de ladite deuxième manette (35) dans ledit deuxième plan;
    - un premier capteur (71) couplé à ladite première manette (34) pour produire un quatrième signal de détection (U71) représentatif d'une force exercée sur ladite première manette (34);
    - un deuxième capteur (72) couplé à ladite deuxième manette (35) pour produire un cinquième signal de détection (U72) représentatif d'une force exercée sur ladite deuxième manette (35);
    - un troisième capteur (73) couplé à ladite roue (1, 2) pour produire un sixième signal de détection (U73) représentatif d'un couple de pivotement exercé sur ladite roue (1, 2);

et que lesdits moyens de calcul (61 à 66, 74) sont agencés de manière à produire :

- ledit premier signal de commande (U64) avec une valeur égale à la différence entre, d'une part, la somme desdits deuxième (U3), troisième (U2), quatrième (U71), cinquième (U72) et sixième (U73) signaux de détection et, d'autre part, deux fois ledit premier signal de détection (U1);
- ledit deuxième signal de commande (U74) avec une valeur égale à la différence entre, d'une part, la somme desdits premier (U1) et troisième (U2) signaux de détection et, d'autre part, deux fois ledit deuxième signal de détection (U3); et
- ledit troisième signal de commande (U65) avec une valeur égale à la différence entre, d'une part, la somme desdits premier (U1) et deuxième (U3) signaux de détection et, d'autre part, deux fois ledit troisième signal de détection (U2).

10. Dispositif selon la revendication 6, caractérisé par le fait que lesdits moyens d'asservissement comportent en outre :

- un troisième moteur (53) couplé mécaniquement à ladite deuxième manette (35) et des moyens (68) couplés électriquement audit troisième moteur (53) pour provoquer un déplacement de ladite deuxième manette (35) dans ledit deuxième plan, par l'intermédiaire dudit troisième moteur (53), en réponse à un troisième signal de commande (U65), l'amplitude et le sens du déplacement de ladite deuxième manette (35) étant dépendants de la valeur dudit troisième signal de commande (U65);
- un troisième détecteur de position (54) couplé mécaniquement à ladite deuxième manette (35) pour produire un troisième signal de détection (U2) représentatif de la position de ladite deuxième manette (35) dans ledit deuxième plan;
- un premier capteur (71) couplé à ladite première manette (34) pour produire un quatrième signal de détection (U71) représentatif d'une force exercée sur ladite première manette (34);
- un deuxième capteur (72) couplé à ladite deuxième manette (35) pour produire un cinquième signal de détection (U72) représentatif d'une force exercée sur ladite deuxième manette (35);

- un troisième capteur (73) couplé à ladite roue (1, 2) pour produire un sixième signal de détection (U73) représentatif d'un couple de pivotement exercé sur ladite roue (1, 2);

et que lesdits moyens de calcul (61 à 66) sont agencés de manière à produire :

- ledit premier signal de commande (U64) avec une valeur égale à la différence entre, d'une part, la somme desdits deuxième (U3) et troisième (U2) signaux de détection et, d'autre part, deux fois ledit premier signal de détection (U1);
- ledit deuxième signal de commande (U74) avec une valeur égale à la différence entre, d'une part, la somme desdits premier (U1) et troisième (U2) signaux de détection et, d'autre part, deux fois ledit deuxième signal de détection (U3); et
- ledit troisième signal de commande (U65) avec une valeur égale à la différence entre, d'une part, la somme desdits premier (U1), deuxième (U3), quatrième (U71), cinquième (U72) et sixième (U73) signaux de détection et, d'autre part, deux fois ledit troisième signal de détection (U2).

**Claims**

1. Device for controlling the steering of a vehicle having at least one steerable wheel (1, 2) angularly mobile relative to a pivoting axis (1a, 2a) to determine the direction of travel of said vehicle, said device comprising control means (34; 34, 35) comprising at least one control stick (34) that is mobile in a first plane and manually actuable by the driver of said vehicle for steering said vehicle and slaving means coupled to said control means (34; 34, 35) and to said wheel (1, 2) for slaving the angular position of said wheel (1, 2) about said pivoting axis (1a, 2a) to the position of said control stick (34) and arranged to cause a pivoting of said wheel (1, 2) in a first and a second direction in response to a displacement of said control stick (34) in a first and, respectively, a second direction in said first plane and to cause a displacement of said control stick (34) in its first and its second direction in response to a pivoting of said wheel (1, 2) in its first and its second direction, respectively, said slaving means comprising :

- a first motor (51) mechanically coupled to said control stick (34) and means (67) electrically coupled to said first motor (51) for causing a displacement of said control stick (34) in said plane, by means of said first motor (51), in response to a first control signal (U64), the amplitude and the direction of displacement of said control stick (34) being dependent on the value of said first control signal (U64);

- a first position detector (52) mechanically coupled to said control stick (34) for producing a first detection signal (U1) representative of the position of said control stick (34) in said plane;

- a second motor (7) mechanically coupled to said wheel (1, 2) and means (69) electrically coupled to said second motor (7) for causing a pivoting of said wheel (1, 2), by means of said second motor (7), in response to a second control signal (U66; U74), the amplitude and direction of said pivoting of said wheel (1, 2) being dependent on the value of said second control signal (U66; U74);

characterized by the fact that said slaving means comprise :

- a second position detector (55) mechanically coupled to said wheel (1, 2) for producing a second detection signal (U3) representative of the angular position of said wheel (1, 2); and

- computing means (61, 63, 64, 66; 61, 63, 64, 66, 74; 61 to 66; 61 to 66, 74) for producing said first control signal (U64) and said second control signal (U66; U74) in function of said first detection signal (U1) and of said second detection signal (U3).

2. Device according to claim 1, characterized by the fact that said first plane is substantially perpendicular to the longitudinal axis of said vehicle.

3. Device according to claim 1, characterized by the fact that said computing means (61, 63, 64, 66) are arranged for producing said first control signal (U64) with a value equal to the difference between said second detection signal (U3) and said first detection signal (U1) and for producing said second control signal (U66) with a value equal to the difference between said first detection signal (U1) and said second detection signal (U3).

4. Device according to claim 1, characterized by the fact that said slaving means further comprise :

- a first sensor (71) coupled to said control stick (34) for producing a third detection signal (U71) representative of a force exerted on said control stick (34);

- a second sensor (73) coupled to said wheel (1, 2) for producing a fourth detection signal (U73) representative of a pivoting torque exerted on said wheel (1, 2);

and that said computing means (61, 63, 64, 66, 74) are arranged for producing said first control signal (U64) with a value equal to the difference between said second detection signal (U3) and said first detection signal (U1) and for producing said second control signal (U74) with a value equal to the sum of the difference between said first detection signal (U1) and said second detection signal (U3), of said third detection signal (U71) and of said fourth detection signal (U73).

5. Device according to claim 1, characterized by the fact that said slaving means further comprise :

- a first sensor (71) coupled to said control stick (34) for producing a third detection signal (U71) representative of a force exerted on said control stick (34);

- a second sensor (73) coupled to said wheel (1, 2) for producing a fourth detection signal (U73) representative of a pivoting torque exerted on said wheel (1, 2);

and that said computing means (61, 63, 64, 66, 74) are arranged for producing said first control signal (U64) with a value equal to the sum of the difference between said second (U3) and said first detection signal (U1), of said third detection signal (U71) and of said fourth detection signal (U73), and for producing said second control signal (U74) with a value equal to the difference between said first (U1) and said second detection signal (U3).

6. Device according to claim 1, characterized by the fact that said first plane is substantially parallel to the longitudinal axis of said vehicle, that said control means comprise a second control stick (35) that is movable in a second plane at least substantially parallel to said first plane, that said first and second control sticks (34, 35) are respectively disposed on opposite sides of said driver who can move them manually in a first direction towards the front-end of said vehicle and in a second direction towards the rear-end of said vehicle in said first and said second plane respectively, and that said slaving means are further arranged to cause :

- a pivoting of said wheel (1, 2) in its first direction and in its second direction in response to a displacement of said second control stick (35) in its second direction and in its first direction, respectively;
- a displacement of said second control stick (35) in its first and in its second direction in response to a pivoting of said wheel (1, 2) in its second and in its first direction, respectively; and
- a displacement of one of said first and second control sticks (34, 35) in its first and its second direction in response to a displacement of the other of said control sticks in its second and its first direction, respectively.

7. Device according to claim 6, characterized by the fact that said slaving means further comprise :

- a third motor (53) mechanically coupled to said second control stick (35) and means (68) electrically coupled to said third motor (53) for causing a displacement of said second control stick (35) in said second plane, by means of said third motor (53), in response to a third control signal (U65), the amplitude and direction of displacement of said second control stick (35) being dependent on the value of said third control signal (U65);
- a third position detector (54) mechanically coupled to said second control stick (35) for producing a third detection signal (U2) representative of the position of said second control stick (35) in said second plane;
  and that said computing means (61 to 66) are arranged for producing:
- said first control signal (U64) with a value equal to the difference between, on the one hand, the sum of said second (U3) and third (U2) detection signals and, on the other hand, two times said first detection signal (U1);
- said second control signal (U66) with a value equal to the difference between, on the one hand, the sum of said first (U1) and third (U2) detection signals and, on the other hand, two times said second detection signal (U3); and
- said third control signal (U65) with a value equal to the difference between, on the one hand, the sum of said first (U1) and second (U3) detection signals and, on the other hand, two times said third detection signal (U2).

8. Device according to claim 6, characterized by the fact that said slaving means further comprise :

- a third motor (53) mechanically coupled to said second control stick (35) and means (68) electrically coupled to said third motor (53) for causing a displacement of said second control stick (35) in said second plane, by means of said third motor (53), in response to a third control signal (U65), the amplitude and direction of displacement of said second control stick (35) being dependent on the value of said third control signal (U65);
- a third position detector (54) mechanically coupled to said second control stick (35) for producing a third detection signal (U2) representative of the position of said second control stick (35) in said second plane;
- a first sensor (71) coupled to said first control stick (34) for producing a fourth detection signal (U71) representative of a force exerted on said first control stick (34);
- a second sensor (72) coupled to said second control stick (35) for producing a fifth detection signal (U72) representative of a force exerted on said second control stick (35);
- a third sensor (73) coupled to said wheel (1, 2) for producing a sixth detection signal (U73) representative of a pivoting torque exerted on said wheel (1, 2);
  and that said computing means (61 to 66, 74) are arranged for producing:
- said first control signal (U64) with a value equal to the difference between, on the one hand, the sum of said second (U3) and third (U2) detection signals and, on the other hand, two times said first detection signal (U1);
- said second control signal (U74) with a value equal to the difference between, on the one hand, the sum of said first (U1), third (U2), fourth (U71), fifth (U72) and sixth (U73) detection signals and, on the other hand, two times said second detection signal (U3); and
- said third control signal (U65) with a value equal to the difference between, on the one hand, the sum of said first (U1) and second (U3) detection signals and, on the other hand, two times said third detection signal (U2).

**9.** Device according to claim 6, characterized by the fact that said slaving means further comprise :
- a third motor (53) mechanically coupled to said second control stick (35) and means (68) electrically coupled to said third motor (53) for causing a displacement of said second control stick (35) in said second plane, by means of said third motor (53), in response to a third control signal (U65), the amplitude and direction of displacement of said second control stick (35) being dependent on the value of said third control signal (U65);
- a third position detector (54) mechanically coupled to said second control stick (35) for producing a third detection signal (U2) representative of the position of said second control stick (35) in said second plane;
- a first sensor (71) coupled to said first control stick (34) for producing a fourth detection signal (U71) representative of a force exerted on said first control stick (34);
- a second sensor (72) coupled to said second control stick (35) for producing a fifth detection signal (U72) representative of a force exerted on said second control stick (35);
- a third sensor (73) coupled to said wheel (1, 2) for producing a sixth detection signal (U73) representative of a pivoting torque exerted on said wheel (1, 2);
and that said computing means (61 to 66, 74) are arranged for producing:
- said first control signal (U64) with a value equal to the difference between, on the one hand, the sum of said second (U3), third (U2), fourth (U71), fifth (U72) and sixth (U73) detection signals and, on the other hand, two times said first detection signal (U1);
- said second control signal (U74) with a value equal to the difference between, on the one hand, the sum of said first (U1) and third (U2) detection signals and, on the other hand, two times said second detection signal (U3); and
- said third control signal (U65) with a value equal to the difference between, on the one hand, the sum of said first (U1) and second (U3) detection signals and, on the other hand, two times said third detection signal (U2).

**10.** Device according to claim 6, characterized by the fact that said slaving means further comprise :
- a third motor (53) mechanically coupled to said second control stick (35) and means (68) electrically coupled to said third motor (53) for causing a displacement of said second control stick (35) in said second plane, by means of said third motor (53), in response to a third control signal (U65), the amplitude and direction of displacement of said second control stick (35) being dependent on the value of said third control signal (U65);
- a third position detector (54) mechanically coupled to said second control stick (35) for producing a third detection signal (U2) representative of the position of said second control stick (35) in said second plane;
- a first sensor (71) coupled to said first control stick (34) for producing a fourth detection signal (U71) representative of a force exerted on said first control stick (34);
- a second sensor (72) coupled to said second control stick (35) for producing a fifth detection signal (U72) representative of a force exerted on said second control stick (35);
- a third sensor (73) coupled to said wheel (1, 2) for producing a sixth detection signal (U73) representative of a pivoting torque exerted on said wheel (1, 2);
and that said computing means (61 to 66) are arranged for producing:
- said first control signal (U64) with a value equal to the difference between, on the one hand, the sum of said second (U3) and third (U2) detection signals and, on the other hand, two times said first detection signal (U1);
- said second control signal (U74) with a value equal to the difference between, on the one hand, the sum of said first (U1) and third (U2) detection signals and, on the other hand, two times said second detection signal (U3); and
- said third control signal (U65) with a value equal to the difference between, on the one hand, the sum of said first (U1), second (U3), fourth (U71), fifth (U72) and sixth (U73) detection signals and, on the other hand, two times said third detection signal (U2).

**Patentansprüche**

**1.** Lenkvorrichtung eines Fahrzeuges, das mindestens ein richtungsgebendes Rad (1, 2) aufweist, das winkelbeweglich relativ zu einer Schwenkachse (1a, 2a) ist zum Festlegen der Fahrtrichtung des Fahrzeuges, welche Vorrichtung Steuermittel (34; 34, 35) umfaßt, umfassend mindestens einen ersten Verstellhebel (34), der in einer ersten Ebene beweglich ist und von dem Fahrzeugführer manuell betätigbar ist zum Lenken des Fahrzeuges sowie Regelmittel, die mit den Steuermitteln (34; 34, 35) und dem Rad (1, 2) gekoppelt sind zum Regeln der Winkelposition des genannten Rades (1, 2) um die Schwenkachse (1a, 2a) entsprechend der Position des Verstellhebels (34) sowie ausgebildet sind zum Bewirken einer Verschwenkung des Rades (1, 2) in einer ersten bzw.einer zweiten Richtung in Reaktion auf eine Verlagerung des Verstellhebels (34) in einer ersten bzw. einer zweiten Richtung in der ersten Ebene und zum Bewirken einer Verlagerung des Verstellhebels (34) in seiner ersten und seiner zweiten Richtung in Reaktion auf eine Verschwenkung des Rades (1, 2) in seiner ersten bzw. zweiten Richtung, welche Regelmittel umfassen:

- einen ersten mechanisch mit dem Verstellhebel (34) gekoppelten Motor (51) und Mittel (67), die elektrisch mit dem ersten Motor (51) gekoppelt sind zum Bewirken einer Verlagerung des genannten Verstellhebels (34) in der ersten Ebene mittels des ersten Motors (51) in Reaktion auf ein erstes Steuersignal (U64), wobei die Amplitude und die Richtung der Verlagerung des Verstellhebels (34) abhängen von dem Wert des ersten Steuersignals (U64);
- einen ersten Positionsdetektor (52), mechanisch gekoppelt mit dem Verstellhebel (34) zum Erzeugen eines ersten Erfassungssignals (U1), das repräsentativ ist für die Position des Verstellhebels (34) in der Ebene;
- einen zweiten Motor (7), mechanisch mit dem Rad (1, 2) gekoppelt, und Mittel (69), elektrisch mit dem zweiten Motor (7) gekoppelt zum Bewirken einer Verschwenkung des Rades (1, 2) mittels des zweiten Motors (7) in Reaktion auf ein zweites Steuersignal (U66, U74), wobei die Amplitude und die Richtung der Verschwenkung des Rades (1, 2) abhängen von dem Wert des zweiten Steuersignals (U66, U74); dadurch gekennzeichnet, daß die Regelmittel umfassen:
- einen zweiten Positionsdetektor (55), mechanisch gekoppelt mit dem Rad (1, 2) zum Erzeugen eines zweiten Erfassungssignals (U3), das repräsentativ ist für die Winkelposition des Rades (1, 2); und
- Berechnungsmittel (61, 63, 64, 66; 61, 63, 64, 66, 74; 61 bis 66; 61 bis 66, 74) zum Erzeugen des ersten Steuersignals (U64) und des zweiten Steuersignals (U66; U74) in Abhängigkeit von dem ersten Erfassungssignal (U1) und dem zweiten Erfassungssignal (U3).

2. Vorrichtung nach Anspruch 1, dadurch gekennzeichnet, daß die erste Ebene im wesentlichen senkrecht zur Längsachse des Fahrzeuges verläuft.

3. Vorrichtung nach Anspruch 1, dadurch gekennzeichnet, daß die Berechnungsmittel (61, 63, 64, 66) derart ausgebildet sind, daß sie das erste Steuersignal (U64) mit einem Wert gleich der Differenz zwischen dem zweiten Erfassungssignal (U3) und dem ersten Erfassungssignal (U1) erzeugen und das zweite Steuersignal (U66) mit einem Wert gleich der Differenz zwischen dem ersten Erfassungssignal (U1) und dem zweiten Erfassungssignal (U3) erzeugen.

4. Vorrichtung nach Anspruch 1, dadurch gekennzeichnet, daß die Regelmittel ferner umfassen:
- einen ersten Sensor (71), angekoppelt an den Verstellhebel (34) zum Erzeugen eines dritten Erfassungssignals (U71), das repräsentativ ist für eine auf den Verstellhebel (34) ausgeübtes Kraft;
- einen zweiten Sensor (73), gekoppelt mit dem Rad (1, 2) zum Erzeugen eines vierten Erfassungssignals (U73), das repräsentativ ist für ein auf das Rad (1, 2) ausgeübtes Schwenkmoment; und daß die Berechnungsmittel (61, 63, 64, 66, 74) derart ausgebildet sind, daß sie das erste Steuersignal (U64) mit einem Wert gleich der Differenz zwischen dem zweiten (U3) und dem ersten Erfassungssignal (U1) erzeugen und das zweite Steuersignal (U74) mit einem Wert gleich der Summe der Differenz zwischen dem ersten (U1) und zweiten Erfassungssignal (U3), des dritten Erfassungssignals (U71) und des vierten Erfassungssignals (U73) erzeugen.

5. Vorrichtung nach Anspruch 1, dadurch gekennzeichnet, daß die Regelmittel ferner umfassen:
- einen ersten Sensor (71), angekoppelt an den Verstellhebel (34) zum Erzeugen eines dritten Erfassungssignals (U71), das repräsentativ ist für eine auf den Verstellhebel (34) ausgeübte Kraft;

- einen zweiten Sensor (73), angekoppelt an das Rad (1, 2) zum Erzeugen eines vierten Erfassungssignals (U73), das repräsentativ ist für ein auf das Rad (1, 2) ausgeübtes Schwenkmoment;

    und daß die Berechnungsmittel (61, 63, 64, 66, 74) derart ausgebildet sind, daß sie das erste Steuersignal (U74) mit einem Wert gleich der Summe der Differenz zwischen dem zweiten (U3) und dem ersten Erfassungssignal (U1), des dritten Erfassungssignals (U71) und des vierten Erfassungssignals (U73) erzeugen und das zweite Steuersignal (U74) mit einem Wert gleich der Differenz zwischen dem ersten (U1) und dem zweiten Erfassungssignal (U3) erzeugen.

6. Vorrichtung nach Anspruch 1, dadurch gekennzeichnet, daß die erste Ebene im wesentlichen parallel zur Längsachse des Fahrzeuges verläuft, daß die Steuermittel einen zweiten Verstellhebel (35) umfassen, der in einer zweiten Ebene beweglich ist, welche im wesentlichen parallel zur ersten Ebene verläuft, daß der erste und der zweite Verstellhebel (34, 35) beidseits des Fahrzeugführers angeordnet sind, der sie manuell in einer ersten Richtung nach vorn bezüglich des Fahrzeugs und in einer zweiten Richtung nach hinten bezüglich des Fahrzeuges in der ersten bzw. zweiten Ebene verlagern kann und daß die Regelmittel ferner derart ausgebildet sind, daß sie bewirken:

    - eine Verschwenkung des Rades (1, 2) in seiner ersten Richtung bzw. seiner zweiten Richtung in Reaktion auf eine Verlagerung des zweiten Verstellhebels (35) in seiner zweiten Richtung bzw. in seiner ersten Richtung;
    - eine Verlagerung des zweiten Verstellhebels (35) in seiner ersten bzw. seiner zweiten Richtung in Reaktion auf eine Verschwenkung des Rades (1, 2) in seiner zweiten bzw. seiner ersten Richtung; und
    - eine Verlagerung eines von dem ersten und zweiten Verstellhebel (34, 35) in seiner ersten bzw. zweiten Richtung in Reaktion auf eine Verlagerung des anderen der Verstellhebel (34, 35) in seiner zweiten bzw. seiner ersten Richtung.

7. Vorrichtung nach Anspruch 6, dadurch gekennzeichnet, daß die Regelmittel ferner umfassen:
    - einen dritten Motor (53), mechanisch gekoppelt mit dem zweiten Verstellhebel (35), und Mittel (68), elektrisch mit dem dritten Motor (53) gekoppelt zum Bewirken einer Verlagerung des zweiten Verstellhebels (35) in der zweiten Ebene mittels des dritten Motors (53) in Reaktion auf ein drittes Steuersignal (U65), wobei die Amplitude und die Verlagerungsrichtung des zweiten Verstellhebels (35) abhängen von dem Wert des dritten Steuersignals (U65);

- einen dritten Positionsdetektor (54), mechanisch gekoppelt mit dem zweiten Verstellhebel (35) zum Erzeugen eines dritten Erfassungssignals (U2), das repräsentativ ist für die Position des zweiten Verstellhebels (35) in der zweiten Ebene;

    und daß die Berechnungsmittel (61 bis 66) derart ausgebildet sind, daß sie erzeugen:

- das erste Steuersignal (U64) mit einem Wert gleich der Differenz zwischen einerseits der Summe der zweiten (U3) und dritten (U2) Erfassungssignale und andererseits dem Zweifachen des ersten Erfassungssignals (U1);
- des zweiten Steuersignals (U66) mit einem Wert gleich der Differenz zwischen einerseits der Summe der ersten (U1) und dritten (U2) Erfassungssignale und andererseits dem Zweifachen des zweiten Erfassungssignals (U3); und
- das dritte Steuersignal (U65) mit einem Wert gleich der Differenz zwischen einerseits der Summe der ersten (U1) und zweiten (U3) Erfassungssignale und andererseits dem Zweifachen des dritten Erfassungssignals (U2).

8. Vorrichtung nach Anspruch 6, dadurch gekennzeichnet, daß die Regelmittel ferner umfassen:
    - einen dritten Motor (53), mechanisch angekoppelt an den zweiten Verstellhebel (35), und Mittel (68), elektrisch gekoppelt mit dem dritten Motor (53) zum Bewirken einer Verlagerung des zweiten Verstellhebels (35) in der zweiten Ebene mittels des dritten Motors (53) in Reaktion auf ein drittes Steuersignal (U65), wobei die Amplitude und die Verlagerungsrichtung des zweiten Verstellhebels (35) abhängen von dem Wert des dritten Steuersignals (U65);
    - einen dritten Positionsdetektor (54), mechanisch gekoppelt mit dem zweiten Verstellhebel (35) zum Erzeugen eines dritten Erfassungssignals (U2), das repräsentativ ist für die Position des zweiten Verstellhebels (35) in der zweiten Ebene;
    - einen ersten Sensor (51), angekoppelt an den ersten Verstellhebel (34) zum Erzeugen eines vierten Erfassungssignals (U71), das repräsentativ ist für eine auf den ersten Verstellhebel (34) ausgeübte Kraft;

- einen zweiten Sensor (72), angekoppelt an den zweiten Verstellhebel (35) zum Erzeugen eines fünften Erfassungssignals (U72), das repräsentativ ist für eine auf den zweiten Verstellhebel (35) ausgeübte Kraft;
- einen dritten Sensor (73), angekoppelt an das Rad (1, 2) zum Erzeugen eines sechsten Erfassungssignals (U73), das repräsentativ ist für ein auf das Rad (1, 2) ausgeübtes Schwenkmoment;

und daß die Berechnungsmittel (61 bis 66, 74) derart ausgebildet sind, daß sie erzeugen:

- das erste Steuersignal (U64) mit einem Wert gleich der Differenz zwischen einerseits der Summe der zweiten (U3) und dritten (U2) Erfassungssignale und andererseits dem Zweifachen des ersten Erfassungssignals (U1);
- das zweite Steuersignal (U74) mit einem Wert gleich der Differenz zwischen einerseits der Summe der ersten (U1), dritten (U2), vierten (U71), fünften (U72) und sechsten (73) Erfassungssignale und andererseits dem Zweifachen des zweiten Erfassungssignals (U3); und
- das dritte Steuersignal (U65) mit einem Wert gleich der Differenz zwischen einerseits der Summe der ersten (U1) und zweiten (U3) Erfassungssignale und andererseits dem Zweifachen des dritten Erfassungssignals (U2).

9. Vorrichtung nach Anspruch 6, dadurch gekennzeichnet, daß die Regelmittel ferner umfassen:
- einen dritten Motor (53), mechanisch gekoppelt mit dem zweiten Verstellhebel (35), und Mittel (68), elektrisch gekoppelt mit dem dritten Motor (53) zum Bewirken einer Verlagerung des zweiten Verstellhebels (35) in der zweiten Ebene mittels des dritten Motors (53) in Reaktion auf ein drittes Steuersignal (U65), wobei die Amplitude und die Verlagerungsrichtung des zweiten Verstellhebels (35) abhängen von dem Wert des dritten Steuersignals (U65);
- einen dritten Positionsdetektor (54), mechanisch gekoppelt mit dem zweiten Verstellhebel (35) zum Erzeugen eines dritten Erfassungssignals (U2), das repräsentativ ist für die Position des zweiten Verstellhebels (35) in der zweiten Ebene;

- einen ersten Sensor (71), angekoppelt an den ersten Verstellhebel (34) zum Erzeugen eines vierten Erfassungssignals (U71), das repräsentativ ist für eine auf den ersten Verstellhebel (34) ausgeübte Kraft;
- einen zweiten Sensor (72), angekoppelt an den zweiten Verstellhebel (35) zum Erzeugen eines fünften Erfassungssignals (U72), das repräsentativ ist für eine auf den zweiten Verstellhebel (35) ausgeübte Kraft;
- einen dritten Sensor (73), angekoppelt an das Rad(1, 2) zum Erzeugen eines sechsten Erfassungssignals (U73), das repräsentativ ist für ein auf das Rad (1, 2) ausgeübtes Schwenkmoment;

und daß die Berechnungsmittel (61 bis 66, 74) derart ausgebildet sind, daß sie erzeugen:

- das erste Steuersignal (U64) mit einem Wert gleich der Differenz zwischen einerseits der Summe der zweiten (U3), dritten (U2), vierten (U71), fünften (U72) und sechsten (U73) Erfassungssignale und andererseits dem Zweifachen des ersten Erfassungssignals (U1);

das zweite Steuersignal (U74) mit einem Wert gleich der Differenz zwischen einerseits der Summe der ersten (U1) und dritten (U2) Erfassungssignale und andererseits dem Zweifachen des zweiten Erfassungssignals (U3); und
- das dritte Steuersignal (U65) mit einem Wert gleich der Differenz zwischen einerseits der Summe der ersten (U1) und zweiten (U3) Erfassungssignale und andererseits dem Zweifachen des dritten Erfassungssignals (U2).

10. Vorrichtung nach Anspruch 6, dadurch gekennzeichnet, daß die Regelmittel ferner umfassen:
- einen dritten Motor (53), mechanisch gekoppelt mit dem zweiten Verstellhebel (35), und Mittel (68), elektrisch gekoppelt mit dem dritten Motor (53) zum Bewirken einer Verlagerung des zweiten Verstellhebels (35) in der zweiten Ebene mittels des dritten Motors (53) in Reaktion auf ein drittes Steuersignal (U65), wobei die Amplitude und die Verlagerungsrichtung des zweiten Verstellhebels (35) abhängen von dem Wert des dritten Steuersignals (U65); - einen dritten Positionsdetektor (54), mechanisch gekoppelt mit dem zweiten Verstellhebel (35) zum Erzeugen eines dritten Erfassungssignals (U2), das repräsentativ ist für die Position des zweiten Verstellhebels (35) in der zweiten Ebene;

- einen ersten Sensor (71), angekoppelt an den ersten Verstellhebel (34) zum Erzeugen eines vierten Erfassungssignals (U71), das repräsentativ ist für eine auf den ersten Verstellhebel (34) ausgeübte Kraft;

- einen zweiten Sensor (72), angekoppelt an den zweiten Verstellhebel (35) zum Erzeugen eines fünften Erfassungssignals (U72), das repräsentativ ist für eine auf den zweiten Verstellhebel (35) ausgeübte Kraft;

- einen dritten Sensor (73), angekoppelt an das Rad (1, 2) zum Erzeugen eines sechsten Erfassungssignals (U73), das repräsentativ ist für ein auf das Rad (1, 2) ausgeübtes Schwenkmoment;

und daß die Berechnungsmittel (61 bis 66) derart ausgebildet sind, daß sie erzeugen:

- das erste Steuersignal (U64) mit einem Wert gleich der Differenz zwischen einerseits der Summe der zweiten (U3) und dritten (U2) Erfassungssignale und andererseits dem Zweifachen des ersten Erfassungssignals (U1);

- das zweite Steuersignal (U74) mit einem Wert gleich der Differenz zwischen einerseits der Summe der ersten (U1) und dritten (U2) Erfassungssignale und andererseits dem Zweifachen des zweiten Erfassungssignals (U3); und

- das dritte Steuersignal (U65) mit einem Wert gleich der Differenz zwischen einerseits der Summe der ersten (U1), zweiten (U3), vierten (U71), fünften (U72) und sechsten (U73) Erfassungssignale und andererseits dem Zweifachen des dritten Erfassungssignals (U2).

Fig.1

Fig.2

Fig.3

Fig.4

Fig.5

Fig. 6